(19) Europäisches Patentamt
European Patent Office
Office européen des brevets

(11) **EP 2 889 227 B1**

(12) **EUROPEAN PATENT SPECIFICATION**

(45) Date of publication and mention
of the grant of the patent:
**21.02.2018 Bulletin 2018/08**

(51) Int Cl.:
**B65B 1/28** *(2006.01)*     **B65B 31/06** *(2006.01)*
**B65B 31/04** *(2006.01)*     B29K 69/00 *(2006.01)*
B29C 45/00 *(2006.01)*     B65B 51/14 *(2006.01)*

(21) Application number: **13832234.2**

(22) Date of filing: **19.08.2013**

(86) International application number:
**PCT/JP2013/072095**

(87) International publication number:
**WO 2014/034465 (06.03.2014 Gazette 2014/10)**

(54) **PACKAGING METHOD FOR GRANULAR SUBSTANCE AND DEVICE FOR PACKAGING GRANULAR SUBSTANCE**

VERPACKUNGSVERFAHREN FÜR KÖRNIGEN STOFF UND VORRICHTUNG ZUR VERPACKUNG EINES KÖRNIGEN STOFFES

PROCÉDÉ D'EMBALLAGE POUR SUBSTANCE GRANULAIRE ET DISPOSITIF PERMETTANT D'EMBALLER UNE SUBSTANCE GRANULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2012 JP 2012186208**

(43) Date of publication of application:
**01.07.2015 Bulletin 2015/27**

(73) Proprietor: **Mitsubishi Gas Chemical Company, Inc.**
**Tokyo 100-8324 (JP)**

(72) Inventors:
• **ZOUTA Keiichi**
**Tokyo 125-8601 (JP)**
• **KAYANO Yoshihiro**
**Tokyo 125-8601 (JP)**
• **NAKAO Kimitaka**
**Tokyo 125-8601 (JP)**

• **TOKITA Atsuhiro**
**Tokyo 125-8601 (JP)**
• **BAO Hada**
**Tokyo 125-8601 (JP)**

(74) Representative: **Hoffmann Eitle**
**Patent- und Rechtsanwälte PartmbB**
**Arabellastraße 30**
**81925 München (DE)**

(56) References cited:
| EP-A1- 1 186 552 | EP-A1- 1 733 968 |
| WO-A1-03/095328 | FR-A1- 2 193 736 |
| JP-A- S5 571 226 | JP-A- S5 571 226 |
| JP-A- H03 239 508 | JP-U- H0 611 878 |
| JP-U- H0 611 878 | JP-U- H0 611 878 |
| US-A- 1 406 380 | US-A- 2 506 769 |
| US-A- 2 889 673 | US-A- 3 518 809 |
| US-A- 4 418 513 | US-A- 5 491 957 |

**Description**

[Technical Field]

The present invention relates to a method of packaging a particle-like material, and, a packaging machine for a particle-like material.

[Background Art]

Polycarbonate resin has a number of excellent characteristics including not only good heat resistance and mechanical characteristics, but also good dimensional accuracy, and has been widely used in a variety of fields. However with increase in applications of a molded article made of polycarbonate resin (simply referred to as "molded article", hereinafter), for example, as a light guide plate to which light enters in parallel to the plane thereof, a problem of translucency, not having been appreciated in past days, has apparently become an issue to be discussed. More specifically, the molded article has been noticeably colored in yellow (amber), and has been hardly used without modification, for applications where a high level of translucency is required.

As solutions to the problem, for example, JP-A-H06-145337 stipulates a pretreatment prior to synthesis of polycarbonate resin, and JP-A-H05-331277 and Japanese Translation of PCT International Application Publication JP-T2-2002-533544 disclose techniques of controlling oxygen concentration during synthesis. JP-A-H06-145492 discloses a technique of mixing an antioxidant to a polycarbonate copolymer. In addition, regarding a method of manufacturing a resin product based on extrusion molding, a technique of deoxidation treatment of a raw resin material by a general vacuum drying, in advance of extrusion molding, is disclosed in JP-A-2009-029031. A technique of introducing an inert gas into a hopper provided to a molding machine is disclosed in JP-A-2001-088176.
JP S55 71226 A discloses further background art.

[Citation List]

[PATENT LITERATURE]

[Patent Literature 1] JP-A-H06-145337
[Patent Literature 2] JP-A-H05-331277
[Patent Literature 3] Japanese Translation of PCT International Application Publication JP-T2-2002-533544
[Patent Literature 4] JP-A-H06-145492
[Patent Literature 5] JP-A-2009-029031
[Patent Literature 6] JP-A-2001-088176

[Summary of Invention]

[Technical Problem]

However, even if the polycarbonate resin is pre-treated in the process of synthesis, or even if the oxygen concentration in the process of synthesis is controlled, or even if the antioxidant is added to the polycarbonate resin, the polycarbonate resin will have an increased amount of dissolved oxygen gas over the period before being actually molded, in other word, the particle-like material will have an increased amount of dissolved oxygen gas, and this varies an optimum amount of consumption of antioxidant, if the polycarbonate resin is allowed to remain exposed to the air after synthesized or manufactured, in other words, if the particle-like material is allowed to remain exposed to the air. More specifically, the amount of addition of antioxidant, even supposed to be sufficient for molding immediately after manufacture, will become insufficient after the polycarbonate resin was allowed to stand in the air after manufactured, and thereby the polycarbonate resin will be colored. Meanwhile, the amount of addition, if controlled so as to be sufficient even after a long lapse of time from the manufacture, will be excessive for molding if it takes place immediately after the manufacture. This will result in adhesion (mold deposit) onto dies and transfer rollers, and will degrade the translucency due to the additive. Even if the raw resin material (particle-like material) is subjected to deoxidation treatment immediately before extrusion molding, or, even if an inert gas is introduced, but only limitedly, into a hopper provided to a molding machine, the amount of dissolved oxygen gas once increased in the packaged article may be hardly reduced. Investigations by the present inventors have revealed that molding of the polycarbonate resin (particle-like material), remained to have a large content of dissolved oxygen gas, can give only a molded article considerably colored in yellow (amber).

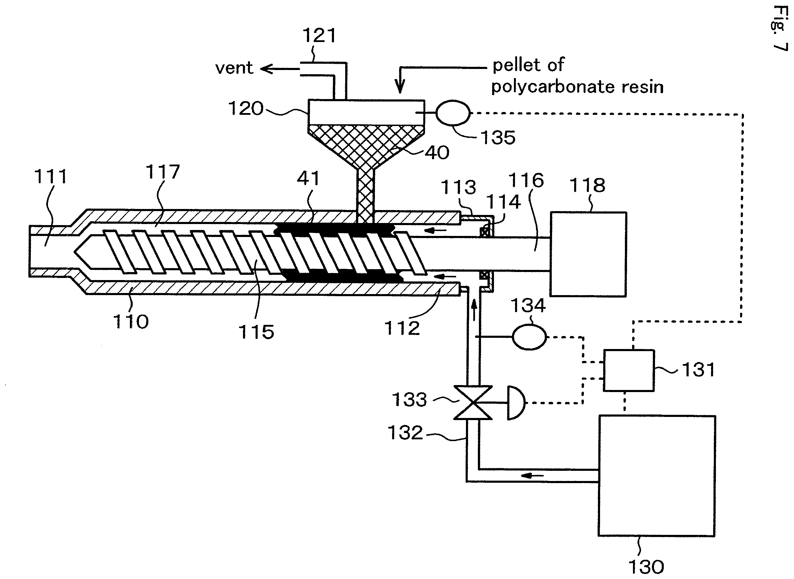

Referring now, for example, to "Poricaboneto rej in handobukku, in Japanese (Handbook of Polycarbonate Resin)", edited by Seiichi Homma, p.323, Fig. 7.128, the amount of oxygen absorption by polycarbonate resin under annealing at 140°C is shown. Drying temperature of polycarbonate resin before molding is 120°C, and it is generally understood that oxygen is incorporated into the resin during pre-molding drying. The measurement is based on mass gain sensed by a thermobalance, as described in Journal of Applied Polymer Science, Vol.10, P843-857.

Note that also acrylonitrile resin and COP resin often give molded articles distinctively colored in yellow (amber).

It is therefore of an object of the present invention to provide a method of packaging a particle-like material, capable of strictly preventing the amount of dissolved oxygen gas in the particle-like material from increasing, and, a packaging machine for a particle-like material suitable for implementing the method of packaging.

It is a further object of the present invention to equalize injection of the inert gas coming through the plurality of inert gas introduction portions aligned in the longitudinal direction of the inert gas introduction pipe; to equalize discharge of the inert gas out through the plurality of inert gas exhaust portions aligned in the longitudinal direction of the inert gas exhaust pipe; and further to equalize flow of the inert gas from the inert gas introduction portions towards the inert gas exhaust portions.

[Solution to Problem]

According to the present invention for achieving the object described above, there is provided a packaging machine for a particle-like material which includes:

an inert gas introduction pipe;
an inert gas exhaust pipe; and,
a temporary closing equipment which temporarily closes an opening portion of an airtight container filled with a particle-like material, while keeping the opening portion airtight with respect to the inert gas introduction pipe and the inert gas exhaust pipe which are inserted through the opening portion into the airtight container, and,
in the airtight container filled up with the particle-like material, an inert gas introduction portion provided to the inert gas introduction pipe, and, an inert gas exhaust portion provided to the inert gas exhaust pipe, are kept unexposed by the particle-like material, and the inert gas introduction pipe and the inert gas exhaust pipe are arranged apart from each other in the airtight container.

The inert gas introduction portion provided to the inert gas introduction pipe is configured by a plurality of through holes, the diameter of which becoming larger as becoming more distant from the opening portion of the airtight container; and the inert gas exhaust portion provided to the inert gas exhaust pipe may be configured by a plurality of through holes, the diameter of which becoming larger as becoming more distant from the opening portion of the airtight container, or, the inert gas introduction portion provided to the inert gas introduction pipe is configured by one or a plurality of slit potions, the width of which becoming larger as becoming more distant from the opening portion of the airtight container; and the inert gas exhaust portion provided to the inert gas exhaust pipe may be configured by one or a plurality of slit portions, the width of which becoming larger as becoming more distant from the opening portion of the airtight container.

In one embodiment of the packaging machine for a particle-like material of the present invention, the temporary closing equipment may be configured to have:

a pair of holding members which hold the opening portion of the airtight container from the outside for airtight closure; and,
a moving apparatus which moves the holding members in an approaching direction and in a departing direction, to or from each other.

In the packaging machine for a particle-like material of the present invention including the preferable embodiment described above, portions of the holding members which are brought into contact with the opening portion of the airtight container are preferably configured by a flexible material. In this case, by configuring the portions of the holding members brought into contact with the opening portion of the airtight container using the flexible material, the inert gas introduction pipe and the inert gas exhaust pipe which are inserted through the opening portion into the airtight container may be kept airtight with respect to the opening portion. The flexible material used in these cases is exemplified by elastic member, and more specifically thermosetting elastomer and thermoplastic elastomer such as urethane rubber, silicone rubber, fluorine-containing rubber and butadiene rubber. The appearance may be so-called rubber form or sponge form. The moving apparatus may be configured by a cylinder driven by pneumatic or hydraulic pressure. By configuring the portions of the holding members brought into contact with the opening portion of the airtight container using the flexible material, it is now possible to ensure the temporary closure of the opening portion of the airtight container, and prevention of leakage of the inert gas through a gap between the opening portion of the airtight container, and the inert gas introduction pipe and the inert gas exhaust pipe. Also any fracture of a portion of the airtight container, brought into contact with the holding members, may more strictly be prevented from being damaged. For example, the holding members may be divided into three parts, and each of which may be attached with a moving apparatus. In this configuration, a first portion of the holding members may press the periphery of the inert gas introduction pipe to create an airtight condition, a second portion of the holding members may press a main portion of the opening portion of the airtight container to create an airtight condition, and a third portion of the holding members may press the periphery of the inert gas exhaust pipe to create an airtight condition.

The packaging machine for a particle-like material of the present invention, including the preferable embodiments and configurations described above, may additionally have a heat-seal equipment which heat-seals the opening portion of the airtight container. In one embodiment, the heat-seal equipment and the temporary closing equipment may be arranged in this order from the side closer to the bottom of the airtight container; and in another embodiment, a first temporary closing equipment, the heat-seal equipment, and a second temporary closing equipment may be arranged in this order from the side closer to the bottom of the airtight container. By providing two sets of temporary closing equipment, it is now possible not only to prevent more strictly the inert gas from leaking through the opening portion of the air tight container when the inert gas introduction pipe and the inert gas exhaust pipe are removed from the airtight container, but also to heat-seal the opening portion of the airtight container more strictly, since the opening portion of the airtight container is heat-sealed, while temporarily closing the opening portion of the airtight container by the first temporary closing equipment and the second temporary closing equipment. The heat-seal equipment may be configured by a heat-seal equipment having a publicly known structure.

In the packaging machine for a particle-like material of the present invention, the inert gas introduction pipe and the inert gas exhaust pipe are arranged apart from each other in the airtight container. It is furthermore preferable that the inert gas introduction pipe and the inert gas exhaust pipe are arranged most apart, or apart as possible, from each other in the airtight container. The inert gas introduction portion and the inert gas exhaust portion, positioned closest to the bottom of the airtight container (opposed to the opening portion), are preferably 5 cm or less away from the bottom of the airtight container, or, preferably distant by a length corresponded to 20% or less of the depth of the airtight container.

In the packaging machine for a particle-like material of the present invention, including the preferable embodiments and configurations described above, the inert gas introduction pipe may be connected to an inert gas source, and the inert gas exhaust pipe may be connected to an inert gas disposal portion. For example, the inert gas disposal portion is equipped with a vacuum pump, wherein by operating the vacuum pump, the inert gas exhaust pipe may be brought into an evacuated condition. The cross-sectional shape of the inert gas introduction pipe and the inert gas exhaust pipe, taken by intersecting them by a virtual plane which crosses normal to the axial direction thereof (more specifically, the cross-sectional shape of the main portions which are brought into contact with the particle-like material, when the airtight container is filled up with such particle-like material), is preferably given by a shape oblong in the direction of movement of the holding members (open/close direction of the opening portion of the airtight container) (for example, ellipse, oval, ovoid, rhombus, rounded rhombus, and blade-like). More specifically, the length of the cross-sectional shape of the inert gas introduction pipe and the inert gas exhaust pipe, measured in the direction of movement of the holding members (open/close direction of the opening portion of the airtight container) is typically 5 mm to 20 mm. The thickness and the degree of flexibility of the flexible material composing the holding member will suffice, if the flexible material can keep the inert gas introduction pipe and the inert gas exhaust pipe, which are inserted through the opening portion into the airtight container, airtight with respect to the opening portion; if the flexible material can allow withdrawal of the inert gas introduction pipe and the inert gas exhaust pipe out through the opening portion, while keeping the temporary closure (airtightness) of the opening portion of the airtight container using the holding members; and if the flexible material can keep the temporary closure (airtightness) of the opening portion, after the inert gas introduction pipe and the inert gas exhaust pipe are withdrawn out through the opening portion. The inert gas introduction pipe and the inert gas exhaust pipe may be made of metal (for example, iron or aluminum), alloy (for example, stainless steel, aluminum alloy or brass), or plastic.

According to the present invention for achieving the object described above, there is provided a method according to claim 8.

In one embodiment of the method of packaging a particle-like material of the present invention,
the airtight container, having an oxygen transmission rate of 100 $cm^3/(m^2 \cdot 24h \cdot atm)$ or below, and a moisture vapor transmission rate at 40°C, 90% RH of 0.1 gram/(m2·24 hours) or less, may be used;
the opening portion may temporarily be closed, while filling the airtight container with the particle-like material having a content of dissolved oxygen gas, per 1 gram of particle-like material, of 0.015 $cm^3$ or less; and,
the opening portion of the airtight container may be closed, while keeping the oxygen gas concentration in the inner atmosphere of the airtight container at 2% by volume or below, preferably 0.5% by volume or below, and more preferably 0.1% by volume ($1 \times 10^3$ ppm) or below.

In the above-described preferable embodiment of the method of packaging a particle-like material of the present invention, it is preferable to temporarily close the opening portion while filling the inside of the airtight container with the particle-like material having a moisture content of $2\times10^2$ ppm or less, and preferably $1.5\times10^2$ ppm or less; and to close the opening portion of the airtight container, while controlling the total moisture content in the inner atmosphere of the airtight container to 0.2 mg per 1 gram of particle-like material. Thereby, foaming during injection molding using the particle-like material may more strictly be prevented. In this case, it is preferable to control an average temperature of the particle-like material, after manufacture of the particle-like material up to filling into the airtight container, to 100°C or higher, and not higher than the glass transition temperature Tg of the thermoplastic resin, thereby the moisture content of the particle-like material may more strictly be suppressed to $2\times10^2$ ppm or below. Further in this case, it is preferable to use an airtight container having a heat resistance temperature of 80°C or above, in order to avoid any damage on the airtight container due to heat of the particle-like material. It is, however, not always necessary to adopt the embodiment in which the moisture content of the particle-like material is set to $2\times10^2$ ppm, and the total moisture content in the inner atmosphere of the airtight container is set to 0.2 mg or below per 1 gram of particle-like material, if the moisture may be removed by an appropriate method immediately before molding the particle-like material, and more specifically, if the moisture in the particle-like material is removed by vacuum drying.

In the method of packaging a particle-like material of the present invention, including the preferable embodiments and configurations described above, the inert gas introduced into the airtight container is preferably discharged through the inert gas exhaust pipe which is kept under reduced pressure, to the inert gas disposal portion. More particularly, for example, the inert gas exhaust pipe may be kept under reduced pressure, by providing a vacuum pump to the inert gas disposal portion, and by operating the vacuum pump.

In the method of packaging a particle-like material of the present invention, the inert gas introduction pipe and the inert gas exhaust pipe are arranged apart from each other in the airtight container. It is furthermore preferable that the inert gas introduction pipe and the inert gas exhaust pipe are arranged most apart, or apart as possible, from each other in the airtight container.

In the method of packaging a particle-like material of the present invention, including the preferable embodiments and configurations described above, also an oxygen gas absorbing agent may be enclosed in the airtight container. In one possible configuration of enclosing the oxygen gas absorbing agent in the airtight container, for example, it suffices that one sachet of oxygen gas absorbing agent (for example, oxygen absorbing agent RP-20A, from Mitsubishi Gas Chemical Company Inc.), per 1 kg of particle-like material stored in the airtight container, may be enclosed. For thorough absorption of gaseous oxygen remaining in the airtight container, the quantity of sachet is preferably determined according to the atmosphere in the airtight container.

The oxygen gas absorbing agent may be composed of an iron oxide-base oxygen gas absorbing agent, or, may be composed of an organic compound-based oxygen gas absorbing agent. The iron oxide-base oxygen gas absorbing agent, which absorbs oxygen based on a chemical reaction of iron with oxygen, is exemplified by "Ageless" from Mitsubishi Gas Chemical Company Inc. The iron oxide-base oxygen gas absorbing agent is classified into moisture-dependent FX type, which starts to absorb oxygen when brought into contact with atmospheric moisture; self-reacting SA type; Z-PT type; and E type. The organic compound-base oxygen gas absorbing agent, which absorbs oxygen based on a reaction of ascorbic acid or catechol with oxygen, is exemplified by "Ageless" from Mitsubishi Gas Chemical Company Inc., which is exemplified by self-reacting GL type. It is also possible to use RP system manufactured by Mitsubishi Gas Chemical Company Inc., in order to prevent oxidation, moisture absorption or discoloration of metal/electronic components. By enclosing the oxygen gas absorbing agent in the airtight container, the inner atmosphere of the airtight container may be conditioned to an oxygen-free and moisture-free more strictly. Various products adapted for different levels of absorption capacity are commercially available.

In the method of packaging a particle-like material of the present invention, including the preferable embodiments and configurations described above, the inner pressure of the airtight container is preferably set to $1.3\times10^4$ Pa or below. Such environment may be created by evacuating the inside of the airtight container using a vacuum pump; or a method of repeating evacuation using a vacuum pump and introducing a small amount of inert gas.

In the method of packaging a particle-like material of the present invention, including the preferable embodiments and configurations described above, the airtight container may be composed of an aluminum-sealed packaging material (packaging bag), or, nylon-gas-barrier multi-layered sheet packaging material (packaging bag), or still alternatively, may be composed of metal can (for example, hermetical can made of metal or alloy, such as stainless steel). As the aluminum-sealed packaging material (packaging bag), those having a three-layered structure are exemplified by PET film (12 μm thick)/aluminum foil (9 μm thick)/PE film (60 μm thick), and PET film (12 μm thick)/aluminum-evaporated film/PE film (60 μm thick); those having a four-layered structure are exemplified by PET film (12 μm thick)/aluminum foil (9 μm thick)/nylon film (15 μm thick)/PE film (60 μm thick), PET film (12 μm thick)/aluminum foil (9 μm thick)/nylon film (15 μm thick)/PP film (80 μm thick), and PP film (60 μm thick)/nylon film (15 μm thick)/aluminum foil (9 μm thick)/PP film (30 μm thick) ; and those having a five-layered structure are exemplified by PET film (12 μm thick)/PE film (15 μm thick)/aluminum foil (7 μm thick)/PE film (15 μm thick)/PE film (40 μm thick). The oxygen transmission rate [$cm^3$/($m^2$·24h·atm thick), 20°C to 25°C] is generally 0 for PET film (12 μm thick)/aluminum foil (9 μm thick)/PE film (60 μm thick), and 0.2 to 6 for PET film (12 μm thick)/aluminum-evaporated film/PE film (60 μm thick). The packaging material (packaging bag) made of nylon-gas-barrier multi-layered sheet, configured to have a two-layered structure, is exemplified by nylon film/silica-evaporated film, and nylon film (15 $\mu$m thick)/PE film (40 $\mu$m thick) ; and those configured to have a three-layered structure is exemplified by nylon film/MXD nylon film/nylon film, and nylon film/EVOH film/nylon film. The gas barrier film is marketed, while classified into PVDC coated film, aluminum-evaporated film, alumina-evaporated film, silica-evaporated film, ONY-base coextruded film, EVOH coextruded film, PVA-coated OPP film, binary evaporated film, acrylic acid-base resin coated film, and hybrid barrier film. In the method of packaging a particle-like material of the present invention, including the preferable embodiments and configurations described above, the airtight container may be composed of any of the various aluminum-sealed packaging material (packaging bag) or packaging material (packaging bag) made of nylon-gas-barrier multi-layered sheet. The packaging bag is available in the lineup of 25-kg bag, 20-kg bag, 15-kg bag, 10-kg bag and 5-kg bag.

In the method of packaging a particle-like material of the present invention, including the preferable embodiments and configurations described above, or, in the packaging machine for a particle-like material of the present invention, including the preferable embodiments and configurations described above, the particle-like material is exemplified by thermoplastic resin, and more specifically exemplified by thermoplastic resin pellet, but not limited thereto. Besides them, acrylonitrile resin or cycloolefin polymer (COP) resin are also usable. The particle-like material may have any form of pellet, sphere and disk. The size of the particle-like material, when assumed to have a spherical form with a diameter $r_0$, is typically given by

$$1 \text{ mm} \leq r_0 \leq 10 \text{ mm}.$$

The various preferable embodiments and configurations of the method of packaging a particle-like material of the present invention are adoptable to the packaging machine for a particle-like material of the present invention, and conversely, the various preferable embodiments and configurations of the packaging machine for a particle-like material of the present invention are adoptable to the method of packaging a particle-like material of the present invention.

By using a thermoplastic resin pellet, such as polycarbonate resin pellet for example, which is the particle-like material packaged according to the method of packaging a particle-like material of the present invention, a molded article composed of a polycarbonate resin may be obtained.

The particle-like material, obtained by the method of packaging a particle-like material of the present invention, including the various preferable embodiments and configurations described above, is preferably stored in the airtight container, while controlling the oxygen gas concentration in the inner atmosphere of the airtight container to 2% by volume or less, and while controlling the content of dissolved oxygen gas in the particle-like material per 1 gram thereof to 0.015 cm$^3$ or less. In this case, it is more preferable to use the airtight container having an oxygen transmission rate of 100 cm$^3$/(m$^2$·24h·atm) or below, and a moisture vapor transmission rate at 40°C, 90% RH of 0.1 gram/(m$^2$·24 hours) or below. In such method of storage, it is preferable to control the moisture content of the particle-like material to $2\times10^2$ ppm or below, and to control the total moisture content in the inner atmosphere of the airtight container to 0.2 mg per 1 gram of particle-like material. It is additionally preferable to keep the pressure inside the airtight container during the storage to $1.3\times10^4$ Pa or below.

In the method of packaging a particle-like material of the present invention, including the preferable embodiments and configurations described above, or, in the packaging machine for a particle-like material of the present invention, including the preferable embodiments and configurations described above, the inert gas may be exemplified by helium gas and argon gas, where it is preferable to use nitrogen gas from the economical viewpoint. When nitrogen gas is used as the inert gas, an inert gas source may be exemplified by commercially available nitrogen gas cylinder, replacement of which is however labor-consuming and costs high. A nitrogen gas generation unit based on separation membrane system or PSA system, which is low-cost and simple, is therefore preferable, as an inert gas source. Meanwhile, in view of removal of oxygen from the environment, it is preferable to use a high-purity nitrogen gas cylinder. The inert gas disposal portion may be configured by any of publicly known systems, and the inert gas source may also function as the inert gas disposal portion. The inert gas introduction pipe and the inert gas exhaust pipe may be manufactured using a metal or alloy, such as iron, stainless steel and brass. From the inert gas source, the inert gas is introduced through piping, the inert gas introduction pipe, and the plurality of through holes or slit portions, into the airtight container. On the other hand, the inert gas introduced into the airtight container is returned through the plurality of through holes or slit portions, the inert gas exhaust pipe and the piping, back to the inert gas disposal portion. The size of the through holes and the slit portions may be determined so as not to allow the particle-like material to enter. The inert gas returned back to the inert gas disposal portion may optionally be recovered by the inert gas source. The same will apply to the inert gas and the inert gas source for the later-described injection molding machine or extruder, when operated using the inert gas.

The molded article thus obtained from polycarbonate resin, when molded into 30 cm thick and illuminated at 460 nm by a C-illuminant used as a light source, has a parallel transmittance of 65% or larger, and preferably 70% or larger. The YI-value in this case is 18 or smaller, and preferably 15 or smaller.

Alternatively, the molded article thus obtained from polycarbonate resin has a concentration of residual organic solvent of $4 \times 10^2$ ppm or below, and shows a YI-value, measured in the form of a 15%-by-mass solution in methylene chloride, of 2.1 or smaller, and preferably 1.5 or smaller. Now in this case, the parallel transmittance of the 30cm-thick molded article illuminated at 460 nm by the C-illuminant is preferably 65% or larger, and more preferably 70% or larger. The YI-value is preferably 18 or smaller, and more preferably 15 or smaller. The residual organic solvent is derived from an organic solvent used when the polycarbonate resin is synthesized, and is specifically exemplified by methylene chloride, heptane and monochlorobenzene.

The C-illuminant is a standard light source specified by CIE (Commission Internationale de l'Eclairage), with a color temperature of 6740 kelvin, simulating daylight from the blue sky. The parallel transmittance of the 30cm-thick molded article may be measured in accordance with JIS K-7373 5.2(a) "Measurement of Transmittance of Film and Plate" at individual wavelengths, using a spectrophotometer Model ASA-1, from Nippon Denshoku Industries Co., Ltd. The YI-value may be determined in accordance with the method described in JIS K-7373 5.2 (a) "Measurement of Transmittance of Film and Plate".

Concentration of the residual organic solvent may be measured by gas chromatography (GC) according to the method below. Approximately 1 gram of sample is precisely weighed, put in a 20-ml measuring flask, dissolved by adding a solvent for GC measurement, and then diluted up to 20 ml to prepare a sample solution. In the measurement, the sample solution is injected using a microsyringe into the gas chromatography apparatus, and the concentration is determined based on a calibration curve prepared in advance. For the measurement of the YI-value of the 15%-by-mass solution in methylene chloride, approximately 15 grams of sample is precisely weighed, put in a 100-ml measuring flask, dissolved by adding methylene chloride, and then diluted up to 100 ml to prepare a sample solution. The sample is dissolved at room temperature. The polymer solution is put in a 100-mm-long glass cell, and the YI-value is measured in the process of "Measurement of Transmittance of Film and Plate" specified by JIS K-7373 5.2(a). In the measurement, the YI-value is corrected by a blank value obtained by measuring the 100-mm-long glass cell containing the solvent only. The YI-value of the solution will be referred to as "solution-YI-Value", hereinafter.

In the method of packaging a particle-like material of the present invention, including the preferable embodiments and configurations described above, the method of measuring the amount of dissolved oxygen gas in the particle-like material is exemplified by a method by which saturated dissolved oxygen in the particle-like material is measured based on mass change, and the result is compared with mass change shown by a sample to be measured which is allowed to absorb dissolved oxygen up to saturation; a method by which the particle-like material is dissolved into a deoxygenated organic solvent, such as methylene chloride, so as to release the dissolved oxygen into the solvent, and the concentration of dissolved oxygen is directly measured using a dissolved oxygen meter adapted to organic solvent; and a method by which a polymer solution obtained by dissolving the particle-like material into methylene chloride, etc., is heated in nitrogen gas, or, bubbled with nitrogen gas, and oxygen released into the air is quantified using an oxygen detection solution (see Journal of Applied Polymer Science, Vol.10, P843-857, for example). Alternatively, exemplified is a method by which, using a full-automatic, temperature-programmed desorption spectrometer TPD-MASS (TPD-1-AT) from BEL Japan Inc., 1.2 grams of sample is placed in He gas used as a carrier gas (at a flow rate of 50 cc/min), heated from 30°C up to 150°C at a heating rate of 10°C/min., kept for 30 minutes, and the amount of oxygen released within this duration of time is quantified.

The oxygen transmission rate (oxygen transmission rate per unit thickness) may be determined by the differential-pressure method specified in JIS K-7126-1, or, by the equal-pressure method specified in JIS K-7126-2. The differential-pressure method is a method by which a gas is introduced on one side of a film, while keeping the opposite side *in vacuo,* and increase in pressure in the vacuum side is measured using a mercury manometer or a pressure sensor, to thereby determine the transmission rate. The equal-pressure method is a method by which both sides of the film are kept at equal pressure, and the amount of transmission of a gas to be measured, depending on difference in partial pressure, is detected by gas chromatography or by using a sensor, to thereby determine the transmission rate.

When polycarbonate resin is used as the thermoplastic resin (particle-like material), 0 . 02 by mass to 1% by mass of antioxidant may be mixed. The antioxidant is exemplified by phenol-base antioxidant, hindered phenol-base antioxidant, bisphenol-base antioxidant, polyphenol-base antioxidant, organic sulfur compound, and organophosphorus compound such as phosphite. The specific examples of phenol-base antioxidant include 2,6-di-butyl-4-methylphenol, *n*-octadecyl-3-(3',5'-di-*tert*-butyl-4'-hydroxyphenyl)propi onate, tetrakis[methylene-3-(3,5-di-*tert*-butyl-4-hydroxyphenyl)p ropionate] methane, tris(3,5-di-*tert*-butyl-4-hydroxybenzyl)isocyanurate, 4,4'-butylidenebis-(3-methyl-6-tert-butylphenol), triethylene glycol bis[3-(3-*tert*-butyl-hydroxy-5-methylphenyl)propionate], and 3,9-bis{2-[3-(3-*tert*-butyl-4-hydroxy-5-methylphenyl)propi onyloxy]-1,1-dimethylethyl}-2,4,8,10-tetraoxaspiro[5.5]un decane. The hindered phenol-base antioxidant is exemplified by pentaerythritol tetrakis[3-(3,5-di-*tert*-butyl-4-hydroxyphenyl)propionate], octadecyl-3-(3,5-di-*tert*-butyl-4-hydroxyphenyl)propionate, thiodiethylene bis[3-(3,5-di-*tert*-butyl-4-hydroxyphenyl)propionate], N,N'-hexane-1,6-diyl bis[3-(3,5-di-*tert*-butyl-4-hydroxyphenylpropionamide), 2,4-dimethyl-6-(1-methylpentadecyl)phenol, diethyl[[3,5-bis(1,1-dimethylethyl)-4-hydroxyphenyl]methy 1]phosphate, 3,3',3'',5,5',5''-hexa-*tert*-butyl-a,a',a''-(mesitylene-2,4,6 -triyl)tri-*p*-cresol, 4,6-bis(octylthiomethyl)-o-cresol, ethylenebis(oxyethylene)bis[3-(5-*tert*-butyl-4-hydroxy-*m*-t olyl)propionate], hexamethylenebis[3-(3,5-di-*tert*-butyl-4-hydroxyphenyl)pro pionate], 1,3,5-tris(3,5-di-tert-butyl-4-hydroxybenzyl)-1,3,5-triaz ine-2,4,6(1H,3H,5H)-trione, and 2,6-di-tert-butyl-4-(4,6-bis(octylthio)-1,3,5-triazine-2-ylamino)phenol.

Polycarbonate may be synthesized by any of publicly known methods, which are exemplified by various synthetic processes such as interfacial polymerization, pyridine process, transesterification, and ring-opening polymerization of cyclic carbonate compound. More specifically, polycarbonate is a polymer or copolymer of thermoplastic aromatic polycarbonate which may have a straight-chain form or branched form, obtained by allowing an aromatic dihydroxy compound, or together with a small amount of polyhydroxy compound, to react with carbonyl chloride generally known as phosgene, or with carbonate diester represented by dimethyl carbonate or diphenyl carbonate, or with carbonyl-base compound such as carbon monoxide or carbon dioxide.

The aromatic dihydroxy compound used as the raw material is exemplified by 2,2-bis(4-hydroxyphenyl)propane [known as bisphenol-A], 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxy-diphenylmethane, bis-(4-hydroxyphenyl)methane, bis-(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl)sulfone, 2,4'-dihydroxydiphenylsulfone, bis(4-hydroxyphenyl)sulfide, 4,4'-dihydroxydiphenyl ether, 4,4'-dihydroxy-3,3'-dichlorodiphenyl ether, 4,4'-dihydroxy-2,5-diethoxy diphenyl ether, 1-phenyl-1,1-bis(4-hydroxyphenyl)ethane, 1,1-bis(4-hydroxy-3-methylphenyl)cyclohexane, and 1-phenyl-1,1-bis(4-hydroxy-3-methylphenyl)ethane. Bis(4-hydroxyphenyl)alkanes are preferable, and, 2,2-bis(4-hydroxyphenyl)propane [known as bisphenol-A] is particularly preferable. These aromatic dihydroxy compounds may be used independently, or as a mixture of two or more species.

Branched polycarbonate may be obtained by using polyhydroxy compound represented by phloroglucin, 4,6-dimethyl-2,4,6-tris(4-hydroxyphenyl)heptene-2, 4,6-dimethyl-2,4,6-tris(4-hydroxyphenyl)heptane, 2,6-dimethyl-2,4,6-tris(4-hydroxyphenyl)heptene-3, 1,3,5-tris(4-hydroxyphenyl)benzene, and 1,1,1-tris(4-hydroxyphenyl)ethane; or 3,3-bis(4-hydroxyaryl)oxyindole (known as isatinbisphenol), 5-chloroisatin bisphenol, 5,7-dichloroisatin bisphenol and 5-bromoisatin bisphenol, as a part of the above-described aromatic dihydorxy compound. The amount of consumption is 0.01 to 10% by mole, and preferably 0.1 to 2% by mole.

According to the reaction based on interfacial polymerization, polycarbonate may be obtained by reacting an aromatic dihydroxy compound with phosgene, using a molecular weight modifier (chain-end terminator), optionally using an antioxidant for preventing oxidation of the aromatic dihydroxy compound, in the presence of an inert organic solvent to the reaction and an alkaline aqueous solution, generally kept at pH 10 or above, and then by adding a polymerization catalyst such as tertiary amine or quaternary ammonium salt so as to proceed the interfacial polymerization. The molecular weight modifier may be added at any time in the duration from reaction with phosgene up to the start of polymerization reaction, without special limitation. The reaction temperature is 0°C to 35°C, and the reaction time is several minutes to several hours.

The inert organic solvent to the reaction is exemplified by chlorinated hydrocarbons such as dichloromethane, 1,2-dichloroethane, chloroform, monochlorobenzene, and dichlorobenzene; and aromatic hydrocarbons such as benzene, toluene, and xylene. The molecular weight modifier or chain-end terminator is exemplified by monohydric compounds having phenolic hydroxy group, specifically including *m*-methylphenol, p-methylphenol, m-propylphenol, p-propylphenol, *p-tert*-butylphenol, and p-long-chain-alkyl substituted phenol. The polymerization catalyst is exemplified by tertiary amines such as trimethylamine, triethylamine, tributylamine, tripropylamine, trihexylamine, and pyridine; and quaternary ammonium salts such as trimethylbenzylammonium chloride, tetramethylammonium chloride, and triethylbenzylammonium chloride.

Reaction based on transesterification is an ester-exchange reaction between diester carbonate and aromatic dihydroxy compound. In general, by controlling the ratio of mixing of diester carbonate and aromatic dihydroxy compound, or by controlling the degree of pressure reduction during the reaction, desired levels of molecular weight and the content of terminal hydroxy group of polycarbonate may be determined. The content of terminal hydroxy group largely affects heat stability, hydrolytic stability and hue of polycarbonate. For practical physical properties, the content is preferably 1000 ppm or less, and particularly 700 ppm or less. It is general to use, per 1 mole of aromatic dihydroxy compound, an equimolar or larger amount of diester carbonate, where the amount is preferably 1.01 to 1.30 moles.

Synthesis of polycarbonate by transesterification generally employs an ester-exchange catalyst. As the ester-exchange catalyst, generally used without special limitation is alkali metal compound and/or alkali earth metal compound, with which an auxiliary basic compound such as basic boron compound, basic phosphorus compound, basic ammonium compound, or amine-base compound may be used in combination. The transesterification using such raw materials is typically proceeded at a temperature of 100°C to 320°C, so as to finally proceed a melt polycondensation reaction under a reduced pressure of $2.7 \times 10^2$ Pa (2 mmHg), while eliminating byproducts such as aromatic hydroxy compound. The melt polycondensation may be proceeded according to a batch process or a continuous process, where the continuous process is preferable for producing polycarbonate suitable for the present invention, from the viewpoint of stability. In the transesterification, it is preferable to use, as an inactivator for the catalyst contained in polycarbonate, a compound capable of neutralizing the catalyst, such as sulfur-containing acidic compound or derivative thereof. The amount of consumption is 0.5 to 10 equivalents, and preferably 1 to 5 equivalents, relative to the catalytic alkali metal; and generally 1 to 100 ppm, and preferably 1 to 20 ppm, relative to polycarbonate.

The obtained polycarbonate may be isolated by a known method, and then made into a polycarbonate resin pellet by, for example, known strand cold-cutting (a method of pelletization by which polycarbonate resin, once melted, is molded into strand, cooled, then the strand is cut into a predetermined shape to produce pellets); hot-cutting based on the hot-cut-in-air-stream system (a method of pelletization by which polycarbonate resin, once melted, is cut in air stream before wet with water) ; or, hot-cutting based on the underwater hot-cutting system (a method of pelletization by which polycarbonate resin, once melted, is cut under water, and is cooled at the same time). The obtained polycarbonate resin pellet is preferably dried by a method using a hot air drying oven, vacuum drying oven, or dehumidifying drying oven, depending on needs. Shape of the pellet is intrinsically arbitrary, and is exemplified by cylinder, pebble (checkerman), sphere and cube. Also the particle-like material composed of other thermoplastic resin may be manufactured by the same method.

Also additives other than antioxidant may be added to the polycarbonate resin pellet, where the additives are exemplified by phenol-base, phosphorus-base, or sulfur-base heat stabilizers; benzotriazole-base or benzophenone-base UV absorbers; mold releasing agents such as carboxylic acid ester, polysiloxane compound, paraffin wax (polyolefin-base), and polycaprolactone; and antistatic agent.

The thermal stabilizer is exemplified by at least one species selected from the group consisting of (a) phosphite compound having at least one ester in the molecule being formed by esterification with phenol and/or phenol having at least one $C_{1-25}$ alkyl group; (b) phosphorous acid; and (c) tetrakis(2,4-di-tert-butylphenyl)-4,4'-biphenylene-di-phosphonite. Specific examples of the phosphite compound (a) include trioctyl phosphite, tridecyl phosphite, triphenyl phosphite, tris(nonylphenyl) phosphite, tris(octylphenyl) phosphite, tris(2,4-di-*tert*-butylphenyl) phosphite, tridecyl phosphite, dodecyl monophenyl phosphite, dioctyl monophenyl phosphite, diisopropyl monophenyl phosphite, monobutyl diphenyl phosphite, monodecyl diphenyl phosphite, monooctyl diphenyl phosphite, distearyl pentaerythritol diphosphite, diphenyl pentaerythritol diphosphite, bis(2,6-di-*tert*-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-*tert*-butylphenyl)pentaerythritol diphosphite, and bis(2,6-di-*tert*-butyl-4-ethylphenyl)pentaerythritol diphosphite. These compounds may be used independently, or as a mixture of two or more species.

The mold releasing agent is exemplified by at least one compound selected from the group consisting of aliphatic carboxylic acid, ester formed between aliphatic carboxylic acid and alcohol, aliphatic hydrocarbon compound having a number-average molecular weight of 200 to 15000, and polysiloxane-base silicone oil. The aliphatic carboxylic acid is exemplified by saturated or unsaturated aliphatic monobasic, and dibasic or tribasic carboxylic acid. The aliphatic carboxylic acid includes alicyclic carboxylic acid. Among them, preferable examples of aliphatic carboxylic acid include $C_{6-36}$ monobasic or dibasic carboxylic acids, which are more preferably $C_{6-36}$ aliphatic saturated monobasic carboxylic acids. The aliphatic carboxylic acid is specifically exemplified by palmitic acid, stearic acid, caproic acid, capric acid, lauric acid, arachic acid, behenic acid, lignoceric acid, cerotic acid, melissic acid, tetratriacontanoic acid, montanic acid, adipic acid, and azelaic acid. The aliphatic carboxylic acid usable in the ester formed between aliphatic carboxylic acid and alcohol is same as the aliphatic carboxylic acid described previously. Meanwhile, the alcohol is exemplified by saturated or unsaturated, monohydric or polyhydric alcohols. These alcohols may have a substituent such as fluorine atom or aryl group. Among them, preferable are $C_{30}$ or shorter monohydric and polyhydric saturated alcohol, and, more preferable are $C_{30}$ or shorter aliphatic saturated monohydric alcohol and polyhydric alcohol. The aliphatic compound also include alicyclic compound. Specific examples of alcohol include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, di(trimethylolpropane), and dipentaerythritol. The ester compound may contain, as an impurity, aliphatic carboxylic acid and/or alcohol, or may be a mixture of a plurality of compounds. Specific examples of ester formed between aliphatic carboxylic acid and alcohol include beeswax (mixture mainly composed of myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate. The aliphatic hydrocarbon having a number-average molecular weight of 200 to 15000 is exemplified by liquid paraffin, paraffin wax, microwax, polyethylene wax, Fischer-Tropsch wax, and $C_{3-12}$ α-olefin oligomer. Also alicyclic hydrocarbon is included in the aliphatic hydrocarbon. These hydrocarbon compounds may partially be oxidized. Among them, preferable are paraffin wax, polyethylene wax and partial oxide of polyethylene wax, and, more preferable are paraffin wax and polyethylene wax. The number-average molecular weight is preferably 200 to 5000. Each of these aliphatic hydrocarbons may be a single substance, or may be a mixture of substances having a variety of ingredients or molecular weights, so long as the main ingredient thereof falls in the ranges described above. The polysiloxane-base silicone oil is exemplified by dimethyl silicone oil, phenyl methyl silicone oil, diphenyl silicone oil, and fluorinated alkyl silicone. Two or more species of them may be used in combination.

Specific examples of the UV absorber include not only inorganic UV absorbers such as cerium oxide and zinc oxide; but also organic UV absorbers such as benzotriazole compound, benzophenone compound, and triazine compound. Among them, the organic UV absorber is more preferable. In particular, preferable is at least one species selected from the group consisting of benzotriazole compound, 2-(4,6-diphenyl-1,3,5-triazine-2-yl)-5-[(hexyl)oxy]-pheno l, 2-[4,6-bis(2,4-dimethylphenyl)-1,3,5-triazine-2-yl]-5-(oc tyloxy)phenol, 2,2'-(1,4-phenylene)bis[4H-3,1-benzoxazine-4-one], and [(4-methoxyphenyl)-methylene]-propanedioic acid-dimethyl ester. The benzotriazole compound is specifically exemplified by a condensate with methyl-3-[3-*tert*-butyl-5-(2H-benzotriazole-2-yl)-4-hydrox yphenyl]propionate-polyethylene glycol. Other specific examples of the benzotriazole compound include 2-bis(5-methyl-2-hydroxyphenyl)benzotriazole, 2-(3,5-di-tert-butyl-2-hydroxyphenyl)benzotriazole, 2-(3',5'-di-*tert*-butyl-2'-hydroxyphenyl)-5-chlorobenzotri azole, 2-(3-*tert*-butyl-5-methyl-2-hydroxyphenyl)-5-chlorobenzotr iazole, 2-(2'-hydroxy-5'-*tert*-octylphenyl)benzotriazole, 2-(3,5-di-tert-amyl-2-hydroxyphenyl)benzotriazole, 2-[2-hydroxy-3,5-bis($\alpha,\alpha$-dimethylbenzyl)phenyl]-2H-benzot riazole, 2,2'-methylene-bis[4-(1,1,3,3-tetramethylbutyl)-6-(2N-ben zotriazole-2-yl)phenol], and [methyl-3-[3-*tert*-butyl-5-(2H-benzotriazole-2-yl)-4-hydro xyphenyl]propionate-polyethylene glycol] condensate. Two or more species of them may be used in combination. Among them, preferable are 2-(2'-hydroxy-5'-*tert*-octylphenyl)benzotriazole, 2-[2-hydroxy-3,5-bis($\alpha,\alpha$-dimethylbenzyl)phenyl]-2H-benzot riazole, 2-(4,6-diphenyl-1,3,5-triazine-2-yl)-5-[(hexyl)oxy]-pheno 1, 2-[4,6-bis(2,4-dimethylphenyl)-1,3,5-triazine-2-yl]-5-(oc tyloxy)phenol, and 2,2'-methylene-bis[4-(1,1,3,3-tetramethylbutyl)-6-(2N-ben zotriazole-2-yl)phenol].

The photostabilizer is exemplified by benzotriazole-base UV absorber, benzophenone-base UV absorber, triazine-base UV absorber, oxanilide-base UV absorber, malonic ester-base UV absorber, and hindered amine. Specific examples of the photostabilizer include 2,2-methylenebis[4-(1,1,3,3-tetramethylbutyl)-6-(2H-benzo triazole-2-yl)phenol], 2-(2-hydroxy-5-*tert*-octylphenyl)benzotriazole, 2-(3-*tert*-butyl-5-methyl-2-hydroxyphenyl)-5-chlorobenzotr iazole, 2-(5-methyl-2-hydroxyphenyl)benzotriazole, 2-[2-hydroxy-3,5-bis($\alpha,\alpha$-dimethylbenzyl)phenyl]-2H-benzot riazole, 2,2'-methylenebis(4-cumyl-6-benzotriazolephenyl), *p*-phenylenebis(1,3-benzooxazine-4-one), and dimethyl [(4-methoxyphenyl)-methylene]-malonate.

Using the thermoplastic resin pellet, which is the particle-like material packaged by the method of packaging a particle-like material of the present invention, the molded article may be molded by an injection molding method.

Such injection molding method is implemented using an injection molding machine equipped with a mold assembly, the mold assembly including:

(A) a first mold member;
(B) a second mold member;
(C) a cavity formed between the first mold member and the second mold member clamped with each other; and,
(D) a resin injection portion opened in the cavity,

the method including injecting a molten thermoplastic resin, through the resin injection portion, into the cavity formed between the first mold member and the second mold member clamped with each other, and,
the method being characterized by using, as a raw material, the particle-like material packaged by the method of packaging a particle-like material of the present invention (more specifically a thermoplastic resin pellet, and is referred to as "thermoplastic resin pellet of raw material", hereinafter).

The injection molding machine further includes:

(a) a molding cylinder in which the thermoplastic resin pellet of raw material is plasticized and melted (occasionally referred to as heating sleeve or barrel); and,
(b) a hopper attached to the molding cylinder, and through which the thermoplastic resin pellet of raw material is fed into the molding cylinder. The inner atmosphere of the hopper, having the thermoplastic resin pellet of raw material loaded therein, may be controlled to have an oxygen gas concentration of $2\times10^3$ ppm or below. This mode of embodiment is referred to as "first embodiment of injection molding machine", for the convenience sake. Alternatively, the inner pressure of the hopper, having the thermoplastic resin pellet of raw material loaded therein, may be controlled to $1.3\times10^4$ Pa or lower. This mode of embodiment is referred to as "second embodiment of injection molding machine", for the convenience sake.

Still alternatively, the injection molding machine further includes:

(a) a molding cylinder in which the thermoplastic resin pellet of raw material is plasticized and melted; and,
(b) a hopper attached to the molding cylinder, and through which the thermoplastic resin pellet of raw material is fed into the molding cylinder. The molding cylinder is provided with an exhaust port (vent portion), by which the atmosphere in the molding cylinder, when the thermoplastic resin pellet of raw material is plasticized and melted therein, is controlled to have an oxygen gas concentration of $2 \times 10^3$ ppm or below. This mode of embodiment is referred to as "third embodiment of injection molding machine", for the convenience sake. Alternatively, the molding cylinder is provided with an exhaust port (vent portion), and the pressure in the molding cylinder, when the thermoplastic resin pellet of raw material is plasticized and melted therein, is controlled to $1.3 \times 10^4$ Pa or lower. This mode of embodiment is referred to as "fourth embodiment of injection molding machine", for the convenience sake.

Now, the injection molding machine (injection molding apparatus) suitably used is exemplified by a known injection molding machine of the in-line screw type. Depending on the injection molding machine to be used, some modification may be necessary so as to give a sealed structure in the rear end portion of a molding cylinder (heating cylinder) which connects a screw driving unit and a screw, and so that an inert gas may be introduced into the sealed portion.

In the first embodiment of injection molding machine, it is preferable for the injection molding machine to additionally include:

(c) a screw driving unit attached to a rear end portion of a screw, aimed at controlling operation of the screw built in the molding cylinder;
(d) an inert gas source; and,
(e) a piping through which an inert gas from the inert gas source is introduced into the molding cylinder. Operation of the screw is controlled by the screw driving unit, in such a way that the screw is rotated and moved by the screw driving unit.

The piping is preferably attached to a portion of the molding cylinder more closer to the screw driving unit, as compared with a site of the molding cylinder where the hopper is attached. More specifically, the piping is preferably attached to the rearmost end, or in the vicinity thereof, of the molding cylinder on the side closer to the screw driving unit. The piping is preferably configured so as to have a pressure control valve and a pressure sensor provided in the middle way thereof, for the purpose of regulating the flow rate and pressure of the inert gas to be introduced into the molding cylinder at constant. With such configuration, the oxygen gas concentration of the inner atmosphere of the hopper, having the thermoplastic resin pellet of raw material loaded therein, may more strictly be controlled to $2 \times 10^3$ ppm or below.

The inert gas is preferably allowed to flow from the inert gas source, through the piping, the molding cylinder and the hopper, and then discharged out from the system. In this case, a portion of the molding cylinder through which the inert gas flows is preferably configured to be airtight. Note, however, that the portion of the molding cylinder through which the inert gas flows is not necessarily configured to be airtight in a strict sense, instead allowing a slight leakage of the inert gas from the portion of the molding cylinder through which the inert gas flows, so long as the pressure of the inert gas in the portion of the molding cylinder through which the inert gas flows may be kept at almost constant. Again in this case, in a state where the thermoplastic resin pellet of raw material is filled in the hopper, and where the thermoplastic resin pellet of raw material is plasticized in a region between the molding cylinder and the screw, which ranges from the portion of the molding cylinder where the hopper is attached, up to the portion around the resin deriving portion provided to the front end of the molding cylinder, the pressure in the portion of the molding cylinder through which the inert gas flows is preferably higher than the atmospheric pressure. The pressure in the portion of the molding cylinder through which the inert gas flows is preferably higher than the atmospheric pressure, for example, by $2 \times 10^3$ Pa (0.02 kgf/cm$^2$) or around, or above.

When an inline-screw injection molding machine is used as the injection molding machine, the molding cylinder is classified, as arranged from the resin deriving portion on the front end, into a metering zone, a compression zone, and a feed zone, where the hopper is attached to the feed zone. In this configuration, the piping may typically be attached to the rear end portion of the feed zone on the side thereof closer to the screw driving unit. The exhaust port (vent portion), if provided, may be located in the compression zone, or on the downstream side thereof (that is, a portion closer to the resin deriving portion, and typically between the compression zone and the feed zone). Styles, structures and configurations of the molding cylinder, screw, hopper and screw driving unit are intrinsically arbitrary, so that any of publicly known molding cylinder, screw, hopper and screw driving unit are usable. For continuous molding, the thermoplastic resin pellet of raw material used as the source is necessarily fed to the hopper, according to an arbitrary system of feeding. In one possible system, the inside of the hopper is kept at a negative pressure, and the thermoplastic resin pellet of raw material may be conveyed from a raw material resin storage through the piping into the hopper, by pneumatic conveyance (for example, pneumatic conveyance on nitrogen gas flow). The same will apply to the second to fourth embodiments of injection molding machine, if necessary.

In the second embodiment of injection molding machine, the inner pressure of the hopper, having the thermoplastic resin pellet of raw material loaded therein, may be reduced down to $1.3 \times 10^4$ Pa or below, by evacuating the inside of the hopper using a vacuum pump.

In the third embodiment of injection molding machine, the oxygen gas concentration of the inner atmosphere of the molding cylinder, when the thermoplastic resin pellet of raw material is plasticized and melted therein, may be limited to $2 \times 10^3$ ppm or below, by evacuation and discharge using a vacuum pump, or by evacuation using a vacuum pump concurrently with introduction of nitrogen gas, or by replacement with a sufficient amount of nitrogen gas.

In the fourth embodiment of injection molding machine, the pressure in the molding cylinder, when the thermoplastic resin pellet of raw material is plasticized and melted therein, may be reduced down to 1. $3 \times 10^4$ Pa or below, by evacuation using a vacuum pump.

In some cases, a screw preplasticating injection molding machine (injection molding apparatus) may be used as the injection molding machine. The screw preplasticating injection molding machine is a sort of injection molding machine which makes use of a screw extruder for preplastication of the thermoplastic resin pellet of raw material. The thermoplastic resin pellet of raw material is plasticized and melted in a preplasticating heating cylinder. The resin deriving portion of the preplasticating heating cylinder communicates, through a check valve, with the front end portion of the heating cylinder for injection which is equipped with an injection plunger. The hopper may be provided to an appropriate portion of the preplasticating heating cylinder, and the exhaust port (vent portion) may be provided to an appropriate portion of the preplasticating heating cylinder.

The first mold member and the second mold member may be manufactured using a metal material such as carbon steel, stainless steel, aluminum alloy or copper alloy. Structure of the resin injection portion may be any of those of resin injection portion (gate structure) of known styles, which is exemplified by direct gate structure, side gate structure, jump gate structure, pin-point gate structure, tunnel gate structure, ring gate structure, fan gate structure, disk gate structure, flash gate structure, tab gate structure, film gate structure, overlapped gate structure, submarine gate structure, and valve gate structure. The resin injection portion may be provided to the first mold member, or may be provided to both of the first mold member and the second mold member, depending on the structure.

The mold assembly may be configured to be variable in the volume of cavity, according to which the first mold member and the second mold member are clamped so as to make the volume of cavity ($V_C$) larger than the volume of molded article to be molded ($V_M$), the molten thermoplastic resin is injected into the cavity (volume: $V_C$), and the volume of cavity is then reduced down to the volume of molded article to be molded (volume: $V_M$), prior to the start of injection of the molten thermoplastic resin, or at the same time with the start of injection, or during injection, or after completion of injection (injection compression molding). The point of time when the volume of cavity comes equal to the volume of molded article to be molded ($V_M$) may reside in the period of injection of the molten thermoplastic resin, or in the period after completion of injection (also may be at the same time with the completion of injection). Structure of the mold assembly is exemplified by a structure allowing the first mold member and the second mold member to form a spigot joint structure; and a structure that the mold assembly additionally has in the cavity a movable core capable of varying the volume of cavity. Motion of the core is controllable, for example, by a hydraulic cylinder.

Still alternatively, a molded article having a hollow portion may be molded, by providing a pressurized fluid introduction unit to the mold assembly, with which a pressurized fluid is introduced into the molten thermoplastic resin injected in the cavity.

The pressurized fluid is preferably a fluid in the form of gas or liquid under normal temperature and normal pressure, neither reactive nor miscible with the molten thermoplastic resin when introduced into the molten thermoplastic resin. More specifically, usable is a gaseous substance at normal temperature such as nitrogen gas, carbon dioxide gas, air and helium gas; liquid such as water; and liquefied gas under high pressure, among which, inert gas such as nitrogen gas or helium gas is preferable. The pressurized fluid to be injected is more preferably a pressurized fluid not causing burning, induced by adiabatic compression, in the hollow portion of the molded article. When nitrogen gas is used, the gas is preferably has a purity of 90% or above. As the pressurized fluid, also usable is foamable resin and fiber-reinforced resin material. In this case, the foamable resin or fiber-reinforced resin material is filled in the hollow portion. Location of attachment of the pressurized fluid introduction unit is selectable, depending on the shape of molded article to be molded, from a location in the molten resin injection nozzle of the injection molding machine, a location in the resin injection portion of the mold assembly (for example, in the gate), or a portion of attachment of the pressurized fluid introduction unit opened in the cavity. Point of time when injection of the pressurized fluid into the molten thermoplastic resin in the cavity starts may reside in the period of injection of the molten thermoplastic resin, may be at the same time with completion of injection, or may reside in the period after completion of injection. The amount of the molten thermoplastic resin to be introduced into the cavity may be an amount necessary for completely filling up the cavity with the molten thermoplastic resin, or may be an amount insufficient for completely filling up the cavity with the molten thermoplastic resin.

Alternatively, the molded article may be molded by extrusion molding, using the thermoplastic resin pellet of raw material packaged by the method of packaging a particle-like material of the present invention.

Such extrusion method is an extrusion molding method for a thermoplastic resin, by which a thermoplastic resin pellet of raw material is melted, extruded and molded using an extruder, characterized in using, as a raw material, the particle-like material (thermoplastic resin pellet of raw material) packaged by the method of packaging a particle-like material of the present invention.

The extruder preferably includes:

(a) a heating cylinder (also referred to as barrel) having a die, and in which the thermoplastic resin pellet of raw material is plasticized and melted; and,
(b) a hopper attached to the heating cylinder, and through which the thermoplastic resin pellet of raw material is fed to the heating cylinder. If the extruded sheet or film is required to have a smooth surface, it is preferable for the extruder to additionally include:
(c) a plurality of mirror finishing rolls which transfer a smooth surface; and,
(d) an optional unit for bonding a protective film, an optional unit for cutting a protective film into a predetermined length, or an optional take-up unit for a protective film.

The inner atmosphere of the hopper, having the thermoplastic resin pellet of raw material loaded therein, may be controlled to have an oxygen gas concentration of $2{\times}10^3$ ppm or below. This mode of embodiment is referred to as "first embodiment of extruder", for the convenience sake. Alternatively, the inner pressure of the hopper, having the thermoplastic resin pellet of raw material loaded therein, may be controlled to $1.3{\times}10^4$ Pa or lower. This mode of embodiment is referred to as "second embodiment of extruder", for the convenience sake.

Still alternatively, the extruder may include:

(a) a heating cylinder having a die, and in which the thermoplastic resin pellet of raw material is plasticized and melted; and,
(b) a hopper attached to the heating cylinder, and through which the thermoplastic resin pellet of raw material is fed into the heating cylinder.

The heating cylinder may be provided with an exhaust port (vent portion), by which the inner atmosphere of the heating cylinder, when the thermoplastic resin pellet of raw material is plasticized and melted therein, is conditioned to have an oxygen gas concentration of $2{\times}10^3$ ppm or below. This mode of embodiment is referred to as "third embodiment of extruder", for the convenience sake. Alternatively, the heating cylinder may be provided with an exhaust port (vent portion), and the pressure in the heating cylinder, when the thermoplastic resin pellet of raw material is plasticized and melted therein, is controlled to $1.3{\times}10^4$ Pa or lower. This mode of embodiment is referred to as "fourth embodiment of extruder", for the convenience sake.

Now as the extruder, usable are known single screw extruders including vent extruder and tandem extruder; and known twin screw extruders including parallel twin screw extruder and conical twin screw extruder. Also structure, configuration and style of the die are intrinsically arbitrary. The heating cylinder is generally composed of a feed zone, a compression zone, and a metering zone. The die is located on the downstream of the metering zone, and the hopper is attached to the feed zone. Depending on the extruder to be used, some modification may be necessary so as to give a sealed structure in the heating cylinder, and so that an inert gas may be introduced into the heating cylinder. The thermoplastic resin pellet of raw material loaded into the hopper is conveyed in the solid state in the feed zone of the heating cylinder, and plasticized and melted at around the compression zone, measured in the metering zone, and extruded through the die. The exhaust port (vent portion), if provided, may be located in the compression zone, or on the downstream side thereof (typically between the compression zone and the metering zone). Styles, structures and configurations of the heating cylinder, screw and hopper are intrinsically arbitrary, so that any of publicly known heating cylinder, screw and hopper are usable. For continuous molding, the thermoplastic resin pellet of raw material used as the source is necessarily fed to the hopper, according to an arbitrary system of feeding. In one possible system, the inside of the hopper is kept at a negative pressure, and the thermoplastic resin pellet of raw material may be conveyed from a raw material resin storage through the piping into the hopper, by pneumatic conveyance (for example, pneumatic conveyance on nitrogen gas flow).

In the extruder, it is preferable for the feed zone to additionally include:

(c) an inert gas source; and,
(d) a piping through which an inert gas from the inert gas source is introduced into the heating cylinder.

The piping is preferably attached to a portion of the heating cylinder on the upstream of a site where the hopper is attached. The piping is preferably configured to have a pressure control valve and a pressure sensor provided in the middle way thereof, for the purpose of regulating the flow rate and pressure of the inert gas to be introduced into the heating cylinder at constant. With such configuration, the oxygen gas concentration of the inner atmosphere of the hopper, having the thermoplastic resin pellet of raw material loaded therein, may be more strictly controlled to $2{\times}10^3$ ppm or below.

The inert gas is preferably allowed to flow from the inert gas source, through the piping, the heating cylinder, the hopper, and then discharged out from the system. It is also preferable to allow the inert gas to flow in a material bunker (storage) and then to exit, from the viewpoint of effective utilization of the inert gas. In this case, a portion of the heating cylinder through which the inert gas flows is preferably configured to be airtight. Note, however, that the portion of the heating cylinder through which the inert gas flows is not necessarily configured to be airtight in a strict sense, instead allowing a slight leakage of the inert gas from the portion of the heating cylinder through which the inert gas flows, so long as the pressure of the inert gas in the portion of the heating cylinder through which the inert gas flows may be kept at almost constant. Again in this case, in a state where the thermoplastic resin pellet of raw material is filled in the hopper, and where the thermoplastic resin pellet of rawmaterial is plasticized in a region ranging from the portion of the heating cylinder where the hopper is attached, up to the front end of the heating cylinder, the pressure in the portion of the heating cylinder through which the inert gas flows is preferably higher than the atmospheric pressure. The pressure in the portion of the molding cylinder through which the inert gas flows is preferably higher than the atmospheric pressure, for example, by $2\times10^3$ Pa (0.02 kgf/cm$^2$) or around, or above.

In the second embodiment of extruder, the inner pressure of the hopper, having the thermoplastic resin pellet of raw material loaded therein, maybe reduced down to $1.3\times10^4$ Pa or below, by evacuating the inside of the hopper using a vacuum pump.

In the third embodiment of extruder, the oxygen gas concentration of the inner atmosphere of the heating cylinder, when the thermoplastic resin pellet of raw material is plasticized and melted therein, may be limited to $2\times10^3$ ppm or below, by evacuation and discharge using a vacuum pump, or by evacuation using a vacuum pump concurrently with introduction of nitrogen gas, or by replacement with a sufficient amount of nitrogen gas.

In the fourth embodiment of extruder, the pressure in the heating cylinder, when the thermoplastic resin pellet of raw material is plasticized and melted therein, may be reduced down to 1. $3\times10^4$ Pa or below, by evacuation using a vacuum pump.

[Advantageous Effects of Invention]

Since the packaging machine for a particle-like material of the present invention has a temporary closing equipment which temporarily closes an opening portion of an airtight container filled with the particle-like material, while keeping the opening portion airtight with respect to the inert gas introduction pipe and the inert gas exhaust pipe which are inserted through the opening portion into the airtight container, and moreover, since in the airtight container filled up with the particle-like material, an inert gas introduction portion provided to the inert gas introduction pipe, and, an inert gas exhaust portion provided to the inert gas exhaust pipe, are kept unexposed by the particle-like material, so that the inside of the airtight container may be replaced by the inert gas, more precisely and within a short time.

Since in the method of packaging a particle-like material of the present invention, the airtight container is closed after being replaced inside with the inert gas, so that the amount of dissolved oxygen gas in the particle-like material may be prevented from increasing more strictly. Accordingly, it is now possible to use, as a raw material, a particle-like material with a small amount of dissolved oxygen gas in this sort of molding using particle-like material, and thereby to obtain a molded article made of thermoplastic resin only with a negligible level of coloring in yellow (amber) and a distinctively high translucency.

[Brief Description of Drawings]

[Fig. 1]

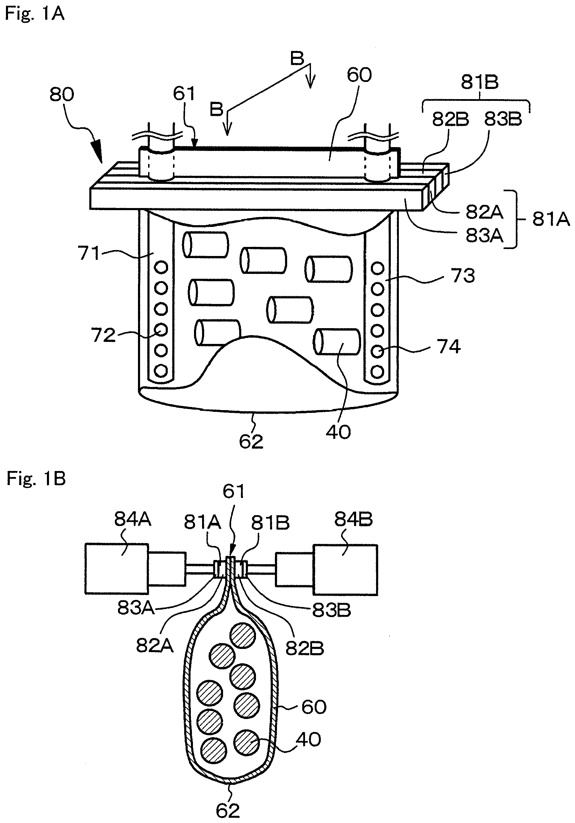

Fig. 1A and Fig. 1B are a schematic drawing and a schematic partial cross-sectional view, respectively, illustrating the airtight container and so forth, for explaining the packaging machine for a particle-like material of the present invention and the method of packaging a particle-like material of the present invention.
[Fig. 2]

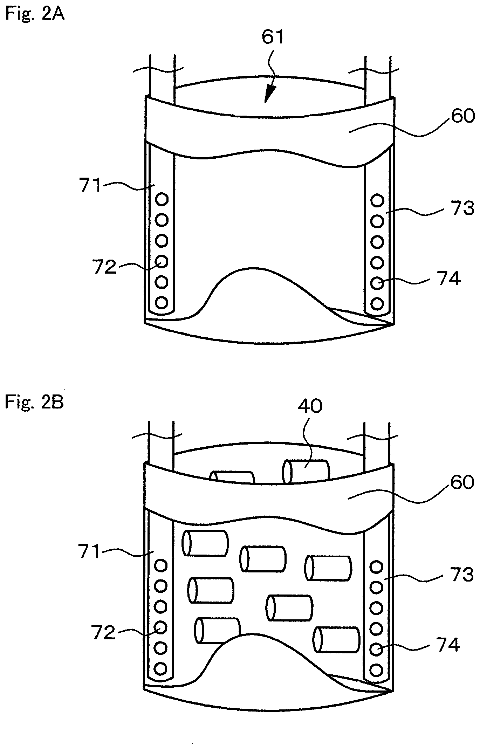

Fig. 2A and Fig. 2B are conceptual diagrams illustrating the airtight container and so forth, for explaining the method of packaging a particle-like material of the present invention.
[Fig. 3]

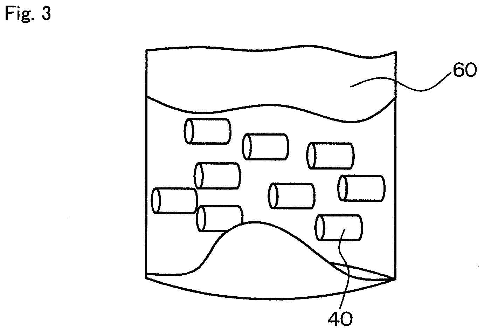

Fig. 3 is a conceptual diagram illustrating the airtight container and so forth, for explaining the method of packaging a particle-like material of the present invention.
[Fig. 4]

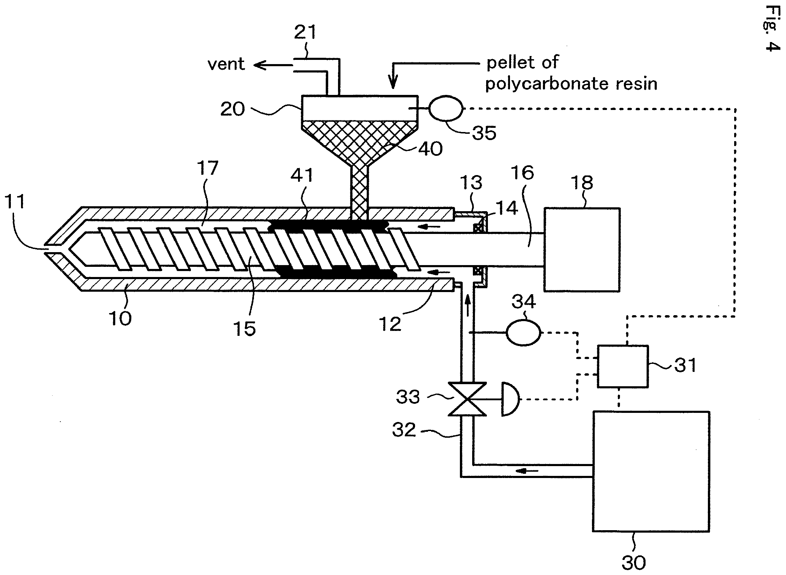

Fig. 4 is a conceptual diagram illustrating an injection molding machine which is suitable for implementing the injection molding method using the thermoplastic resin pellets of raw material in Example 1 to Example 8.
[Fig. 5]

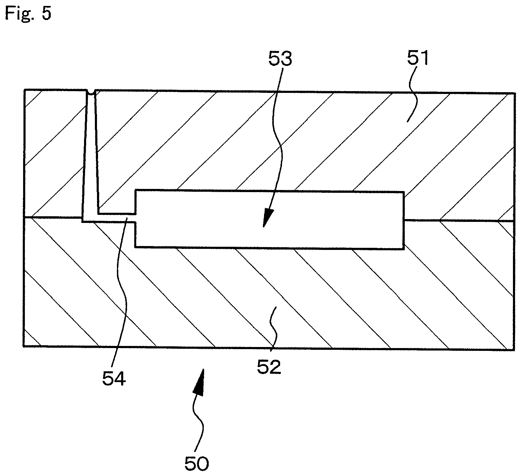

Fig. 5 is a conceptual diagram illustrating a mold assembly provided to an injection molding machine which is suitable for implementing the injection molding method using the thermoplastic resin pellets of raw material in Example 1 to Example 8.
[Fig. 6]

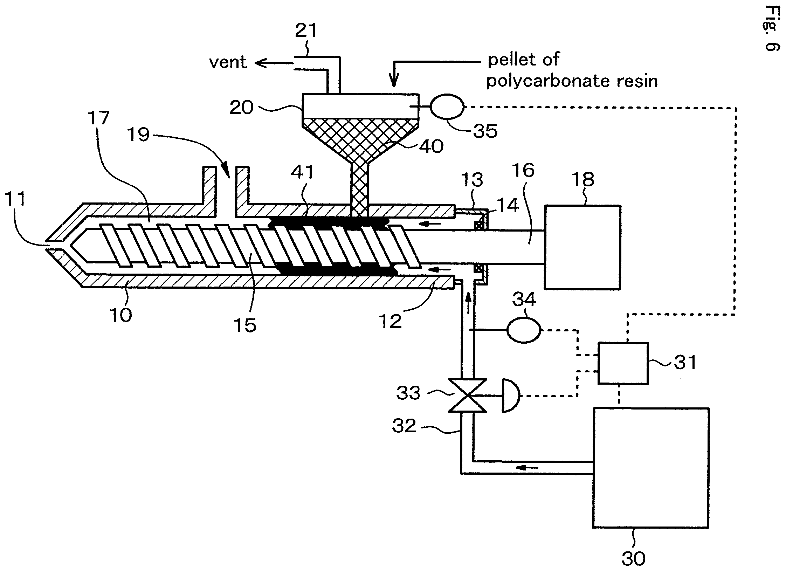

Fig. 6 is a conceptual diagram of an injection molding machine which is suitable for implementing the injection molding method using the thermoplastic resin pellets of raw material in Example 9 and Example 10.
[Fig. 7]
Fig. 7 is a conceptual diagram of an extruder which is suitable for implementing the extrusion method using the thermoplastic resin pellets of raw material of Example 11 to Example 18.
[Fig. 8]

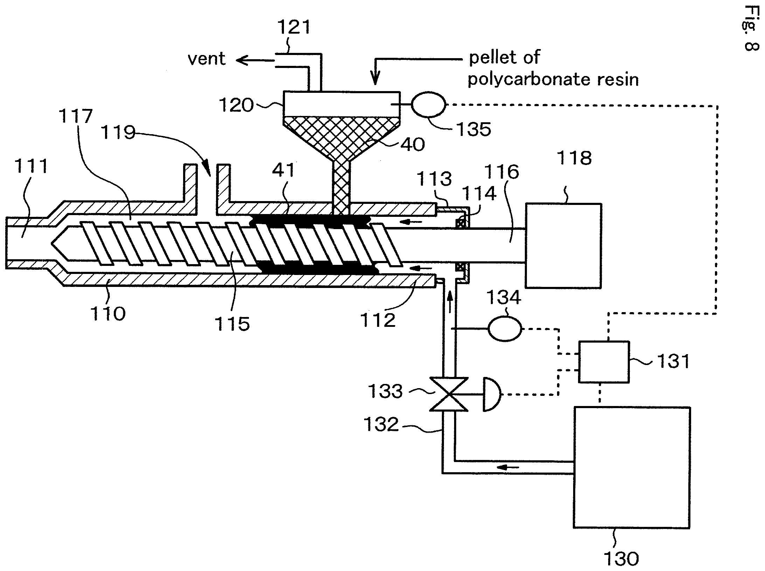

Fig. 8 is a conceptual diagram of an extruder which is suitable for implementing the extrusion method using the thermoplastic resin pellets of raw material in Example 19 and Example 20.

DESCRIPTION OF EMBODIMENTS

The present invention will be explained below based on preferable Examples, referring to the attached drawings. It is to be understood that the present invention is by no means limited to Examples, and that various values and materials are shown merely for illustrative purposes.

[Example 1]

Example 1 relates to the packaging machine for a particle-like material of the present invention, and the method of packaging a particle-like material of the present invention. Example 1 also relates to the injection molding method for a thermoplastic resin, and further relates to the first embodiment of injection molding machine. In the description below, the term "particle-like material" may occasionally be replaced by the term "thermoplastic resin pellet of raw material".
A conceptual diagram and a schematic partial cross-sectional view illustrating an airtight container and so forth, for explaining the packaging machine for a particle-like material of the present invention and the method of packaging a particle-like material of the present invention, are shown in Fig. 1A and Fig. 1B, respectively. Conceptual diagrams illustrating the airtight container and so forth, for explaining the method of packaging a particle-like material of the present invention, are shown in Fig. 2A, Fig. 2B and Fig. 3. These drawings are partial cutaway views of the airtight container. While these drawings illustrate only a small amount of thermoplastic resin pellets of raw material as aligned in the same direction, the thermoplastic resin pellets of raw material are actually stuffed in the airtight container in a random state.
As illustrated in Fig. 1A and Fig. 1B, the packaging machine for a particle-like material of Example 1 includes:

an inert gas introduction pipe 71;
an inert gas exhaust pipe 73; and,
a temporary closing equipment 80 which temporarily closes an opening portion 61 of an airtight container 60 filled with a particle-like material, while keeping the opening portion 61 airtight with respect to the inert gas introduction pipe 71 and the inert gas exhaust pipe 73 which are inserted through the opening portion 61 into the airtight container 60. In the airtight container 60 filled up with the particle-like material, an inert gas introduction portion provided to the inert gas introduction pipe 71, and, an inert gas exhaust portion provided to the inert gas exhaust pipe 73, are kept unexposed by the particle-like material. Note that Fig. 1A does not illustrate moving apparatuses 84A, 84B, and Fig. 1B is a schematic partial cross-sectional view taken along arrow B-B in Fig. 1A.

The temporary closing equipment 80 is specifically configured to have:

a pair of holding members 81A, 81B which hold the opening portion 61 of the airtight container 60 from the outside for airtight closure; and,
moving apparatuses 84A, 84B which move the holding members 81A, 81B in an approaching direction and in a departing direction, to or from each other. The portions (contacting portions) 82A, 82B of the holding members 81A, 81B, brought into contact with the opening portion 61 of the airtight container 60, are configured using a flexible material, which is more specifically an elastic member such as rubber or urethane. The contacting portions 82A, 82B are attached to plate-like supporting members 83A, 83B, typically by using an adhesive. By configuring the contacting portions 82A, 82B using the flexible material, the inert gas introduction pipe 71 and the inert gas exhaust pipe 73, which are inserted through the opening portion 61 into the airtight container 60, may be maintained in a good airtight condition with respect to the opening portion 61.

Degrees of thickness and flexibility of the contacting portions 82A, 82B are appropriately selected, so that the inert gas introduction pipe 71 and the inert gas exhaust pipe 73, inserted through the opening portion 61 into the airtight container 60, can be maintained in a good airtight condition; so that the inert gas introduction pipe 71 and the inert gas exhaust pipe 73 can be withdrawn through the opening portion 61, while temporarily closing (or, while maintaining the airtight condition of) the opening portion 61 of the airtight container 60 using the holding members 81A, 81B; and so that the temporarily closed condition (airtight condition) of the opening portion 61 can be maintained, even after the inert gas introduction pipe 71 and the inert gas exhaust pipe 73 are withdrawn through the opening portion 61.

The moving apparatuses 84A, 84B are configured by a cylinder driven by pneumatic pressure or hydraulic pressure. The holding members 81A, 81B, more specifically, the supporting members 83A, 83B are attached to the moving apparatuses 84A, 84B.

The packaging machine for a particle-like material additionally has a heat-seal equipment (not illustrated) which seals, by heating, the opening portion 61 of the airtight container 60, wherein arranged are the heat-seal equipment and the temporary closing equipment 80 in this order in the direction away from the bottom 62 of the airtight container. Alternatively, the packaging machine for a particle-like material has the first temporary closing equipment, the heat-seal equipment and the second temporary closing equipment which are arranged in this order in the direction away from the bottom 62 of the airtight container.

The inert gas introduction portion provided to the inert gas introduction pipe 71 is configured by a plurality of through holes 72, and the inert gas exhaust portion provided to the inert gas exhaust pipe 73 is configured by a plurality of through holes 74. The inert gas introduction pipe 71 is connected to an inert gas source (not illustrated), and the inert gas exhaust pipe 73 is connected to an inert gas disposal portion (not illustrated). More specifically, the inert gas introduction pipe 71 and the inert gas exhaust pipe 73 made of stainless steel are provided with the plurality of through holes 72, 74. The inert gas is fed, from the inert gas source, through the unillustrated piping, the inert gas introduction pipe 71 and the plurality of through holes 72, into the airtight container 60. Meanwhile, the inert gas introduced into the airtight container 60 (more specifically, nitrogen gas) is returned, through the plurality of through holes 74, the inert gas exhaust pipe 73, and the unillustrated piping, back into the inert gas disposal portion. The inert gas disposal portion has a vacuum pump which is operated to evacuate the inert gas exhaust pipe 73. More specifically, the inert gas introduced into the airtight container 60 is discharged through the evacuated inert gas exhaust pipe 73, into the inert gas disposal portion. More specifically, it suffices that evacuation with a vacuum pump, and introduction of a small amount of inert gas are repeated. The size of the through holes 72, 74 are determined so as not to allow the thermoplastic resin pellet of raw material to enter. Moreover, the diameter of through holes 72, 74 become larger as becoming more distant from the opening portion 61 of the airtight container 60 (or, as becoming closer to the bottom 62 of the airtight container 60). The inert gas returned back to the inert gas disposal portion is collected by the inert gas source, depending on needs.

In place of using the through holes 72, 74, the inert gas introduction portion provided to the inert gas introduction pipe 71 may be configured by one or a plurality of slit potions, the width of which becoming larger as becoming more distant from the opening portion 61 of the airtight container 60; and the inert gas exhaust portion provided to the inert gas exhaust pipe 73 may be configured by one or a plurality of slit potions, the width of which becoming larger as becoming more distant from the opening portion 61 of the airtight container 60 (as becoming more closer to the bottom 62 of the airtight container 60).

Although not specifically limited, as illustrated in the drawings, the inert gas introduction pipe 71 and the inert gas exhaust pipe 73 are preferably arranged apart from each other in the airtight container 60. It is furthermore preferable that the inert gas introduction pipe 71 and the inert gas exhaust pipe 73 are arranged most apart, or apart as possible, from each other in the airtight container 60.

The cross-sectional shape of the inert gas introduction pipe 71 and the inert gas exhaust pipe 73, taken by intersecting them by a virtual plane which crosses normal to the axial direction thereof, is preferably given by a shape oblong in the open/close direction of the opening portion 61 of the airtight container 60 (crosswise direction in FIG. 1B) . More specifically, the cross-sectional shape of the inert gas introduction pipe 71 and the inert gas exhaust pipe 73 is given as a rhombus having a length of 5 mm to 20 mm, more specifically 12 mm, in the open/close direction of the opening portion 61 of the airtight container 60 (crosswise direction in FIG. 1B), and having a length of 100 mm in the orthogonal direction (direction vertical to the sheet of Fig. 1B).

In the method of packaging a particle-like material of Example 1, used is the airtight container 60 having an oxygen transmission rate of 100 $cm^3/(m^2 \cdot 24h \cdot atm)$ or below, and a moisture vapor transmission rate at 40°C, 90% RH of 0.1 gram/($m^2 \cdot$24 hours) or below. More specifically, the airtight container 60 in Example 1 is composed of an aluminum-sealed packaging material (packaging bag), which is more specifically a gas-barrier-type, 25-kg aluminum-sealed packaging material (packaging bag) having a four-layered structure of PP film (60 $\mu$m thick)/nylon film (15 $\mu$m thick)/aluminum foil (9 $\mu$m thick)/PP film (30 $\mu$m thick). The airtight container 60 has an oxygen transmission rate of 0 $cm^3/(m^2 \cdot 24h \cdot atm)$, a moisture vapor transmission rate of 0 g/($m^2 \cdot$24 hours), and a heatproof temperature of 80°C.

The particle-like material, specifically the thermoplastic resin pellet of raw material, used in Example 1, or in Example 2 to Example 20 described later, is more specifically composed of a polycarbonate resin (more specifically, HL-4000 from Mitsubishi Engineering-Plastics Corporation). The molten polycarbonate resin is molded into strand, and then pelletized by the cold-cutting process using a strand cutter. The temperature of the thermoplastic resin pellet of raw material at this point of time is approximately 100°C, and the thermoplastic resin pellet of raw material, just as pelletized, is exposed to the air atmosphere. Immediately thereafter, the pellet is stored in a tank conditioned to have an inert gas atmosphere (more specifically, nitrogen gas atmosphere), and the pellet is cooled.

Next, as illustrated in Fig. 2A, the inert gas introduction pipe 71 and the inert gas exhaust pipe 73 are inserted into the airtight container 60 with the opening portion 61 unsealed.

Then, as illustrated in Fig. 2B, the inside of the airtight container 60 is filled with the thermoplastic resin pellet of raw material 40. In this process, the inside of the airtight container 60 is filled with the thermoplastic resin pellet of raw material 40 having a content of dissolved oxygen gas per 1 gram thereof of 0.015 cm$^3$ or less, and also having a moisture content of $2 \times 10^2$ ppm or less, more preferably $1.5 \times 10^2$ ppm or less. In other words, the thermoplastic resin pellet of raw material 40 is enclosed immediately after manufactured inside the airtight container 60. An average temperature of the thermoplastic resin pellet of raw material 40, after manufacture of the thermoplastic resin pellet of raw material 40 and before filling into the airtight container 60, is set to 60°C or higher, and not higher than the glass transition temperature Tg of the thermoplastic resin, and not higher than the heatproof temperature of the airtight container 60. The heatproof temperature of the airtight container 60 is as described above. Accordingly, the airtight container 60 will not be damaged by heat, even if the thermoplastic resin pellet of rawmaterial 40 at this level of temperature is directly enclosed therein. In this condition, the content of dissolved oxygen gas per 1 gram of thermoplastic resin pellet of raw material is 0.015 cm$^3$ or below, and the moisture content of the thermoplastic resin pellet of raw material is $2 \times 10^2$ ppm or below.

Possible procedure is such as filling the airtight container 60 with the thermoplastic resin pellet of raw material 40, and then inserting therein the inert gas introduction pipe 71 and the inert gas exhaust pipe 73; or such as partially filling the airtight container 60 with the thermoplastic resin pellet of raw material 40, then inserting therein the inert gas introduction pipe 71 and the inert gas exhaust pipe 73, and further filling up the airtight container 60 with the thermoplastic resin pellet of raw material 40.

After filling up the airtight container 60 with the thermoplastic resin pellet of raw material 40, as illustrated in Fig. 1A, the opening portion 61 of the airtight container 60 is temporarily closed. More specifically, as illustrated in the schematic partial cross-sectional view of Fig. 1B, both lateral sides of the opening portion 61 are clamped with a pair of the holding members 81A, 81B. The holding members 81A, 81B are attached to the moving apparatuses 84A, 84B configured by pneumatic cylinders, so that the pair of the holding members 81A, 81B are movable in an approaching direction and in a departing direction, to or from each other, with the aid of operation of the moving apparatuses 84A, 84B. As described previously, when the opening portion 61 is temporarily closed, the plurality of through holes 72, 74 are kept unexposed by the thermoplastic resin pellet of raw material 40 filled in the airtight container 60. In other words, all through holes 72, 74 are kept buried in the thermoplastic resin pellet of raw material 40 filled in the airtight container 60.

The inert gas is then introduced from the inert gas source, through the inert gas introduction pipe 71, into the airtight container 60, and the inert gas introduced into the airtight container 60 is then discharged through the inert gas exhaust pipe 73 out into the inert gas disposal portion, thereby the inside of the airtight container 60 is replaced with the inert gas. The inert gas may be introduced into the airtight container 60 in a continuous manner, or in a discontinuous manner. For the latter case, the introduction of the inert gas into the airtight container 60 takes place while halting the discharge of inert gas through the inert gas exhaust pipe 73. The inert gas is discharged through the inert gas exhaust pipe 73 by operating a vacuum pump, during the period when the inert gas is not fed into the airtight container 60. In this way, the oxygen gas concentration of the inner atmosphere of the airtight container 60 is limited to 2% by volume or below (more specifically, 0.1% by volume or $1 \times 10^3$ ppm or below). The total moisture content of the inner atmosphere of the airtight container 60 is controlled to 0.2 mg or below per 1 gram of thermoplastic resin pellet of raw material 40.

Then the inert gas introduction pipe 71 and the inert gas exhaust pipe 73 are removed from the airtight container 60, and the opening portion 61 of the airtight container 60 is closed by heat sealing, while keeping the opening portion 61 of the airtight container 60 in a temporarily closed condition by the temporary closing equipment 80. The airtight container 60 illustrated in Fig. 3 is obtained in this way.

By actually implementing the method of packaging a particle-like material using the first temporary closing equipment, the heat-seal equipment and the second temporary closing equipment, in place of the first temporary closing equipment and the heat-seal equipment, the opening portion 61 of the airtight container 60 is constantly kept airtight with the aid of the first temporary closing equipment and the second temporary closing equipment, or with the aid of the second temporary closing equipment, and thereby, when the inert gas introduction pipe 71 and the inert gas exhaust pipe 73 are removed from the airtight container 60, leakage of the inert gas through the opening portion 61 of the airtight container 60 is prevented more strictly. Moreover, since the opening portion 61 of the airtight container 60 is sealed by heat, while temporarily closing the opening portion of the airtight container by the first temporary closing equipment and the second temporary closing equipment, so that the opening portion 61 of the airtight container 60 is sealed by heat more strictly.

The oxygen gas concentration in the inner atmosphere of the airtight container 60, measured 40 seconds after the start of replacement of the inside of the airtight container 60 with the inert gas, was summarized in Table 1.

On the other hand, the inert gas introduction pipe and the inert gas exhaust pipe were replaced with those having the through holes being exposed only to an inner top space in the airtight container formed after the opening portion of the airtight container was temporarily closed. While keeping such condition of temporary closure of the opening portion of the airtight container, the inert gas introduction pipe and the inert gas exhaust pipe are positioned so as to locate the through holes thereof only in the inner top space in the airtight container, and the inside of the airtight container 60 was replaced with the inert gas. It was, however, found that the oxygen gas concentration in the inner atmosphere of the airtight container was maintained at approximately 1%, even 10 minutes after the start of replacement.

Thereafter, while keeping the oxygen gas concentration in the inner atmosphere of the airtight container 60 at 2% by volume or below (more specifically, 0.1% by volume or below, or $1 \times 10^3$ ppm or below), the thermoplastic resin pellet of raw material having, per 1 gram thereof, an amount of dissolved oxygen gas of 0.015 cm$^3$ or below was successfully stored inside the airtight container 60. Same results were obtained for Example 2 to Example 20 described later. Moreover, in Example 1, or in Example 2 to Example 20 described later, the thermoplastic resin pellet of raw material was successfully stored, while controlling the moisture content of the thermoplastic resin pellet of raw material to $2 \times 10^2$ ppm or below, and while controlling the total moisture content in the inner atmosphere of the airtight container 60 to 0.2 mg per 1 gram of thermoplastic resin pellet of raw material.

Measured values obtained immediately after the thermoplastic resin pellet of raw material 40 was stored in the airtight container 60 are as summarized in Table 1 below. Measured values, obtained two weeks after the thermoplastic resin pellet of raw material was stored in the airtight container 60, were found to be equal to the values summarized in Table 1.

[Table 1]

| | |
|---|---|
| Amount of dissolved oxygen gas per 1 gram of thermoplastic resin pellet of raw material | : 0.008 cm$^3$ |
| Moisture content of thermoplastic resin pellet of raw material | : 50 ppm |
| Oxygen gas concentration in inner atmosphere of airtight container | : 800 ppm |
| Total moisture content in inner atmosphere of airtight container | : 0.0004 mg/gram |

As described previously, the inert gas introduction pipe 71 and the inert gas exhaust pipe 73 may be provided with one or a plurality of slit potions. It will suffice that the size of the slit portion (s) is determined so as not to allow the thermoplastic resin pellet of raw material 40 to enter. As described previously, in the condition of temporary closure of the opening portion 61, the slit portion(s) are kept unexposed by the thermoplastic resin pellet of raw material 40 filled in the airtight container 60.

In the description below, the amount of dissolved oxygen gas is defined as below.

Amount of dissolved oxygen [A]:

The amount of dissolved oxygen gas in the thermoplastic resin pellet of raw material immediately after stored in the airtight container.

Amount of dissolved oxygen gas [B]:

The amount of dissolved oxygen gas in the thermoplastic resin pellet of raw material after stored in the airtight container, and immediately after unsealing the airtight container.

Amount of dissolved oxygen gas [C]:

The amount of dissolved oxygen gas in the thermoplastic resin pellet of raw material immediately before use for molding.

In the method of injection molding of thermoplastic resin in Example 1, or in Example 2 to Example 10 described later, an injection molding machine illustrated in a conceptual diagram of Fig. 4, equipped with a mold assembly illustrated in a conceptual diagram of Fig. 5, is used. The mold assembly 50 includes:

    (A) a first mold member (fixed mold member) 51;
    (B) a second mold member (movable mold member) 52;
    (C) a cavity 53 formed between the first mold member 51 and the second mold member 52 clamped with each other; and,
    (D) a resin injection portion 54 opened in the cavity 53. This method of injection molding of a thermoplastic resin includes injecting a molten thermoplastic resin, specifically through the resin injection portion 54 having a side-gate structure, into the cavity 53 formed between the first mold member (fixed mold member) 51 and the second mold member (movable mold member) 52 clamped with each other.

In the method of injection molding or in the extrusion method of a thermoplastic resin, in Example 1, or Example 2 to Example 20 described later, used as a raw material is the thermoplastic resin pellet of raw material (more specifically, polycarbonate resin pellet) having an amount of dissolved oxygen gas of 0.015 cm$^3$/gram or less per 1 gram of thermoplastic resin pellet of raw material.

The thermoplastic resin pellet of raw material was stored in the airtight container 60 for two weeks. Thereafter the airtight container 60 was unsealed, and the thermoplastic resin pellet of raw material was immediately loaded into a hopper 20 provided to the injection molding machine. The procedures were basically same also in Example 2 to Example 20 described later. Measured values of the amount of dissolved oxygen gas [A], the amount of dissolved oxygen gas [B], and the amount of dissolved oxygen gas [C] are summarized in Table 3.

The injection molding machine used in Example 1, or in Example 2 to Example 10 described later, is an in-line screw type injection molding machine (injection molding apparatus), and basically includes:

(a) a molding cylinder 10 in which the thermoplastic resin pellet of raw material is plasticized and melted; and,
(b) a hopper 20 attached to the molding cylinder 10, and through which the thermoplastic resin pellet of raw material is fed into the molding cylinder.

The injection molding machine further includes:

(c) a screw driving unit attached to the rear end portion of the screw, aimed at controlling operation of the screw built in the molding cylinder;
(d) an inert gas source; and,
(e) a piping through which an inert gas from the inert gas source is introduced into the molding cylinder. Operation of the screw is controlled by the screw driving unit, in such a way that the screw is rotated and moved by the screw driving unit. The rear end portion of the molding cylinder (heating cylinder) which connects the screw driving unit and the screw is configured to be airtight, typically so as to allow introduction of the inert gas into such an airtight portion.

More specifically, the injection molding machine is configured by a molding cylinder 10 having at the front end thereof a resin deriving portion 11; a screw 15 built in the molding cylinder 10; a hopper 20 attached to the molding cylinder 10, and through which the thermoplastic resin pellet of raw material 40 is fed into the molding cylinder 10; and a screw driving unit 18 attached to a rear end portion 16 of the screw 15. The screw 15 provided to the molding cylinder 10 is based on the in-line screw system as described above, which takes part in plasticizing and melting the resin and at the same time functions as a plunger. The screw 15 is rotated by the screw driving unit 18, and is moved in the crosswise direction of the drawing. The molding cylinder 10 has a heater (not illustrated) attached to the outer circumference thereof, thereby the thermoplastic resin pellet of raw material which resides in a space 17 between the molding cylinder 10 and the screw 15 may be plasticized and melted.

The thermoplastic resin pellet of raw material 40 loaded through the hopper 20 into the molding cylinder 10 is heated, plasticized, melted and measured by the molding cylinder 10 and the screw 15. The screw 15 is pushed forward by the operation of the driving unit 18 to pressurize the molten thermoplastic resin 41 in the molding cylinder 10, so that the molten thermoplastic resin 41 in the molding cylinder 10 is injected out from the resin deriving portion 11, through a check valve, a resin flow path and a resin injection portion (gate portion), into the cavity 53 formed in the mold assembly. While the molten thermoplastic resin 41 is filled up in the space 17 between the molding cylinder 10 and the screw 15, over the range of the molding cylinder 10 which ranges from the site where the hopper 20 is attached, up to the resin deriving portion 11, Fig. 4 illustrates only a part of the resin.

At the rear end portion 12 of the molding cylinder 10, which is a part of the molding cylinder 10 on the screw driving unit side, there is attached an airtight member 13 which keeps the rear end portion 12 airtight, wherein a seal member 14 which keeps a space between the airtight member 13 and the screw 15 airtight is attached to the airtight member 13. With this configuration, the airtight condition in the portion of the molding cylinder 10, through which the inert gas (for example, nitrogen gas with approximately 99.99% purity) flows, may be maintained. The airtight member and the seal member are unnecessary if the molding cylinder 10 *per se* is configured to be airtight. Flow of the inert gas was indicated by arrows in Fig. 4.

The molding machine additionally has a 99.999%-purify gas cylinder as an inert gas source 30, and, a piping 32 through which the inert gas from the inert gas source 30 is fed into the molding cylinder 10. The piping 32 is attached to a portion of the molding cylinder 10 more closer to the screw driving unit, as compared with a site of the molding cylinder 10 where the hopper 20 is attached, and is more specifically attached to the airtight member 13. Alternatively, the piping 32 may be attached to the rear end portion 12 of the molding cylinder 10 on the screw driving unit side. The piping 32 is configured to have a pressure control valve 33 and a pressure sensor 34 provided in the middle way thereof. In order to detect the inner pressure of the hopper 20, a second pressure sensor 35 is attached to the hopper 20. The pressure control valve 33 and the pressure sensors 34, 35 usable here may be any of those having known styles, structures and configurations. Outputs of the pressure sensors 34, 35 are supplied to a pressure control equipment 31, and by the output of the pressure control equipment 31, operations of the pressure control valve 33 and the inert gas source 30 are controlled.

In this configuration, the inert gas flows from the inert gas source 30, through the piping 32, the molding cylinder 10, and a vent portion 21 of the hopper 20, and then exits the system. More specifically, in the state that the hopper 20 is filled with the thermoplastic resin pellet of raw material 40, and that the thermoplastic resin pellet of raw material is plasticized in the space 17 between the molding cylinder 10 and the screw 15, which ranges from the portion of the molding cylinder 10 where the hopper 20 is attached, up to the portion around the resin deriving portion 11 of the molding cylinder 10, the inert gas is allowed to flow from the inert gas source 30, through the piping 32, the molding cylinder 10, and the hopper 20, and then discharged out from the system.

In this state, the pressure in the portion of the molding cylinder through which the inert gas flows (more specifically, the rear end portion 12) is, for example, higher than the atmospheric pressure by $2\times10^3$ Pa (0.02 kgf/cm$^2$) or around. The pressure, or changes in pressure in the rear end portion 12 is detectable by the pressure sensor 34. Based on results of detection of the pressure, the pressure control valve 33 may be controlled by the pressure control equipment 31, and thereby the flow rate of the inert gas may be controlled. Meanwhile, changes in pressure in the hopper 20 is detectable by the second pressure sensor 35, and concurrently, the pressure of the inert gas at the rear end portion 12 is detectable by the pressure sensor 34. Based on results of detection of the pressure, the pressure control valve 33 and the inert gas source 30 may be controlled by the pressure control equipment 31, and thereby the flow rate of the inert gas may be controlled. In this way, the flow rate of the inert gas, which flows from the inert gas source 30, through the piping 32, the molding cylinder 10 and the hopper 20, and then exits the system, may be kept constant as possible, even if the inner pressure of the hopper 20 varies.

Any gas generated from the molten thermoplastic resin 41, having plasticized in the space 17 between the molding cylinder 10 and the screw 15, is allowed to pass through the hopper 20 together with the inert gas flowing in the molding cylinder 10, and then discharged out from the system through the vent portion 21.

In Example 1, or in Example 2 to Example 7 described later, adopted was the first embodiment of injection molding machine, by which the inner atmosphere of the hopper 20, having the thermoplastic resin pellet of rawmaterial loaded therein, was controlled to have an oxygen gas concentration of $2\times10^3$ ppm or below. More specifically, the oxygen gas concentration in the inner atmosphere of the hopper 20 was controlled to $2\times10^3$ ppm or below, based on a method by which a sufficient amount of nitrogen gas is allowed to flow from the inert gas source 30, through the piping 32, the molding cylinder 10, and the hopper 20, and then discharged out from the system, so as to purge the aerial oxygen gas in the hopper.

Injection molding was then conducted according to the conditions summarized in Table 2 below. The same will apply to Example 2 to Example 10 described later. The volume of the cavity 53 was 6 cm$^3$. The molded article was 0.5 cm$\times$0.4 cmx30 cm in size, and has a rod-like form. The same will apply to Example 2 to Example 10 described later.

[Table 2] Injection conditions

| | |
|---|---|
| Temperature of molten thermoplastic resin | : 320 (°C) |
| Temperature of mold members | : 120 (°C) |

As for the thus obtained molded article of Example 1, measured values of the parallel transmittance of 30cm-thick molded article measured at 460 nm using a C-illuminant as a light source (referred to as "30cm-parallel transmittance", hereinafter), the YI-value, the concentration of residual organic solvent, and the solution-YI-value measured in the form of 15%-by-mass solution in methylene chloride were summarized in Table 3. The molded article of Example 1 was found to satisfy all conditions including a parallel transmittance of 65% or larger, an YI-value of 18 or smaller, a concentration of residual organic solvent of $4\times10^2$ ppm or below, and a solution-YI-value measured in the form of a 15%-by-mass solution in methylene chloride of 2.1 or smaller.

In Comparative Example 1, a polycarbonate resin pellet synthesized and manufactured by the same method as in Example 1 was packed in a paper gag, and allowed to stand at room temperature for one month. Immediately thereafter, the polycarbonate resin pellet was loaded into the hopper provided to the injection molding machine. Measured value of the amount of dissolved oxygen gas [C] obtained at that time was listed in Table 3. The inner atmosphere of the hopper was kept as the air atmosphere. As for the molded article of Comparative Example 1 obtained under the same molding conditions as in Example 1, measured values of the 30cm-parallel transmittance, the YI-value, the concentration of residual organic solvent, and the solution-YI-value were summarized in Table 3.

[Table 3]

| | Amount of dissolved oxygen gas (cm$^3$/gram) | | |
|---|---|---|---|
| | [A] | [B] | [C] |
| Example 1 | 0.008 | 0.008 | 0.008 |
| Comparative Example 1 | 0.008 | 0.20 | 0.20 |

| | 30cm-parallel transmittance (%) | YI-value | Concentration of residual organic solvent (ppm) | Solution-YI-value |
|---|---|---|---|---|
| Example 1 | 70 | 13 | 240 | 1.7 |
| Comparative Example 1 | 50 | 19 | 420 | 2.2 |

In Example 1, the thermoplastic resin pellet of raw material is packaged in the airtight container having the inner atmosphere which satisfies the predetermined conditions, and the atmosphere is maintained until the point of time when the thermoplastic resin pellet of raw material is used. As a consequence, it is possible to use, as a raw material, the thermoplastic resin pellet of raw material typically having a content of dissolved oxygen gas of 0.015 cm$^3$ or less per 1 gram thereof. Accordingly, as compared with Comparative Example 1, Example 1 was more successful in obtaining the molded article made of polycarbonate resin, with a negligible level of coloring in yellow (amber), and with a distinctively high translucency which is comparable to that of a PMMA molded article.

[Example 2]

Example 2 is a modification of Example 1. In Example 2, or, in Example 3 to Example 20 described later, the amount of dissolved oxygen gas per 1 gram of thermoplastic resin pellet of raw material, during packaging and storage, was controlled to 0.015 cm$^3$ or below, and the moisture content of the thermoplastic resin pellet of raw material was controlled to $2 \times 10^2$ ppm or below. The oxygen gas concentration inside the airtight container 60 was controlled to 2% by volume or below (more specifically, $1 \times 10^3$ ppm or below), and the total moisture content of the inner atmosphere of the airtight container 60 was controlled to 0.2 mg or below per 1 gram of thermoplastic resin pellet of raw material.
In addition, in Example 2, or, in Example 4 and Example 6 described later, the inner pressure of the airtight container 60 was controlled to $1.3 \times 10^4$ Pa or below. Also in Example 8 to Example 10, the inner pressure of the airtight container 60 may be controlled to $1.3 \times 10^4$ Pa or below. Such inner atmosphere of the airtight container 60 was obtained by enclosing the thermoplastic resin pellet of raw material (source polycarbonate resin pellet) immediately after manufactured, and then evacuating the inside of the airtight container 60 using a vacuum pump.
The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4 \times 10^2$ ppm or below, and a solution-YI-value of 2.1 or smaller.

[Example 3]

Example 3 is a modification of Example 1. In Example 3, the airtight container 60 was configured by a packaging material (packaging bag) made of a nylon-gas-barrier multi-layered sheet, and more specifically by nylon film/MXD nylon film/nylon film. The oxygen transmission rate, which is a characteristic value regarding the oxygen barrier performance of the airtight container 60, is 50 [$cm^3$/($m^2$·24h· atm), 20°C to 25°C]. The oxygen gas concentration inside the airtight container 60 was controlled to $1\times10^3$ ppm or below as in Example 1.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 $cm^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 4]

Example 4 is a modification of Example 2. In Example 4, a packaging material (packaging bag) made of a nylon-gas-barrier multi-layered sheet same as that used in Example 3 was used as the airtight container 60. The inner pressure of the airtight container 60 was controlled to $1.3\times10^4$ Pa or below as in Example 2.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 $cm^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 5]

Example 5 is again a modification of the method of packaging a particle-like material of Example 1. In Example 5, a metal can (more specifically, an airtight can made of stainless steel) was used as the airtight container 60. The oxygen gas concentration inside the airtight container 60 was again controlled to $1\times10^3$ ppm or below as in Example 1.

The thermoplastic resin pellet of raw material same as Example 1 was enclosed in the airtight container 60 substantially in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 $cm^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 6]

Example 6 is again a modification of the method of packaging a particle-like material of Example 2. In Example 6, a metal can (more specifically, an airtight can made of stainless steel) same as that used in Example 5 was used as the airtight container 60. The inner pressure of the airtight container 60 was controlled to 1. $3\times10^4$ Pa or below as in Example 2.

The thermoplastic resin pellet of raw material same as Example 1 was enclosed in the airtight container 60 substantially in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 $cm^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 7]

Example 7 is again a modification of Example 1. In Example 7, an oxygen gas absorbing agent was enclosed together in the airtight container 60. In Example 7, one sachet of oxygen gas absorbing agent (oxygen absorbing agent RP-20A, from Mitsubishi Gas Chemical Company Inc.) was enclosed per 1 kg of thermoplastic resin pellet of raw material in the airtight container 60. The oxygen gas concentration inside the airtight container 60 was again controlled to $1\times10^3$ ppm or below as in Example 1.

While the airtight container 60 used here was an aluminum-sealed packaging material same as that described in Example 1, the airtight container 60 is not limited thereto, allowing use of a packaging material made of nylon-gas-barrier multi-layered sheet same as that explained in Example 3, or allowing use of a metal can (more specifically, an airtight can made of stainless steel) same as that explained in Example 5.

The thermoplastic resin pellet of raw material same as Example 1 was enclosed in the airtight container 60 substantially in the same way as Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 $cm^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 8]

Example 8 is again a modification of Example 1, where the second embodiment of injection molding machine was employed. More specifically, the inner pressure of the hopper, having the thermoplastic resin pellet of raw material loaded therein, was controlled to $1.3\times10^9$ Pa or below. Such control of the inner pressure of the hopper, having the thermoplastic resin pellet of raw material loaded therein, may be achieved by evacuation of the inside of hopper using a vacuum pump. Except for this point, the injection molding method for a thermoplastic resin of Example 8 may be same as the injection molding method for a thermoplastic resin of Example 1, and will not be detailed again.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 $cm^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

Note that Example 2 to Example 7 are, of course, applicable to the second embodiment of injection molding machine explained in Example 8, the third embodiment of injection molding machine which will be described later in Example 9, and the fourth embodiment of injection molding machine which will be described later in Example 10.

[Example 9]

Example 9 is again a modification of Example 1, where the third embodiment of injection molding machine was employed. More specifically, in Example 9, as illustrated in a conceptual drawing of the injection molding machine in Fig. 6, the molding cylinder is equipped with an exhaust port (vent portion) 19. The injection molding machine in Example 9, or in Example 10 described later, basically has the configuration and structure same as those of the injection molding machine illustrated in Fig. 4, except that the exhaust port (vent portion) 19 is provided to the compression zone.

In Example 9, the inner atmosphere of the molding cylinder, in the process of plasticizing and melting the thermoplastic resin pellet of raw material, was controlled to have an oxygen gas concentration of $2\times10^3$ ppm or below. Such control of the inner atmosphere of the molding cylinder may be achieved by evacuation and discharge through the exhaust port (vent portion) 19 using a vacuum pump, or, by introduction of nitrogen gas under evacuation using a vacuum pump, or, by replacement with a sufficient amount of nitrogen gas. Except for this point, the injection molding method for a thermoplastic resin of Example 9 may be same as the injection molding method for a thermoplastic resin of Example 1, and will not be detailed again.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 $cm^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 10]

Example 10 is again a modification of Example 1, where the fourth embodiment of injection molding machine was employed. More specifically, in Example 10, same as in Example 9, the molding cylinder is equipped with an exhaust port (vent portion) 19. The inner pressure of the molding cylinder in the process of plasticizing and melting of the thermoplastic resin pellet of raw material was controlled to $1.3 \times 10^4$ Pa or below. Such control of the inner pressure of the molding cylinder may be achieved by evacuation through the exhaust port (vent portion) 19 using a vacuum pump. Except for this point, the injection molding method for a thermoplastic resin of Example 10 may be same as the injection molding method for a thermoplastic resin of Example 1, and will not be detailed again.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the injection molding machine. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4 \times 10^2$ ppm or below, and a solution-YI-value of 2.1 or smaller.

[Example 11]

Example 11 is again a modification of Example 1. Example 11 relates to an extrusion method for a thermoplastic resin, and further to the first embodiment of extruder.

In Example 11, or in Example 12 to Example 20 described later, in relation to the extrusion method for a thermoplastic resin, an extruder illustrated in a conceptual diagram of Fig. 7 basically includes:

(a) a heating cylinder (also referred to as barrel) 110 having a die 111, and in which the thermoplastic resin pellet of raw material is plasticized and melted; and,
(b) a hopper 120 attached to the heating cylinder 110, and through which the thermoplastic resin pellet of raw material is fed to the heating cylinder 110.

The extruder additionally includes:

(c) an inert gas source 130, and,
(d) a piping 132 through which an inert gas from the inert gas source 130 is introduced into the heating cylinder 110. Operation of a screw 115 is controlled by a screw driving unit 118, in such a way that the screw 115 is rotated by the screw driving unit 118. The rear end portion of the heating cylinder 110 which connects the screw driving unit 118 and the screw 115 is configured to be airtight, typically so as to allow introduction of the inert gas into such an airtight portion.

More specifically, the extruder is configured by the heating cylinder 110 having at the front end thereof the die 111; the screw 115 built in the heating cylinder 110; the hopper 120 attached to the heating cylinder 110, and through which the thermoplastic resin pellet of raw material (source polycarbonate resin pellet) 40 is fed into the heating cylinder 110; and the screw driving unit 118 attached to a rear end portion 116 of the screw 115. The screw 115 provided to the heating cylinder 110 takes part in plasticizing and melting the resin, as descried above. The heating cylinder 110 has a heater (not illustrated) attached to the outer circumference thereof, thereby the thermoplastic resin pellet of raw material which resides in a space 117 between the heating cylinder 110 and the screw 115 may be plasticized and melted.

The thermoplastic resin pellet of raw material 40 is fed into the hopper 120. System of feeding from a source resin storage to the hopper 120 may rely upon an arbitrary system.

The thermoplastic resin pellet of raw material 40 loaded through the hopper 120 into the heating cylinder 110 is heated, plasticized, melted and conveyed by the heating cylinder 110 and the screw 115. The screw 115 is rotated by the operation of the screw driving unit 118 to push forward the molten thermoplastic resin 41 in the heating cylinder 110 to the die 111. While the molten thermoplastic resin 41 is filled up in the space 117 between the heating cylinder 110 and the screw 115, over the range of the heating cylinder 110 which ranges from the site where the hopper 120 is attached, up to the die 111, Fig. 7 illustrates only a part of the resin.

At the rear end portion 112 of the heating cylinder 110, which is a part of the heating cylinder 110 on the screw driving unit side, there is attached an airtight member 113 which keeps the rear end portion 112 airtight, and a seal member 114 which keeps a space between the airtight member 113 and the screw 115 airtight is attached to the airtight member 113. With this configuration, the airtight condition in the portion of the heating cylinder 110, through which the inert gas (for example, nitrogen gas with approximately 99.99% purity) flows, may be maintained. The airtight member and the seal member are unnecessary if the heating cylinder 110 *per se* is configured to be airtight. Flow of the inert gas was indicated by arrows in Fig. 7.

The extruder additionally has a 99.999%-purify gas cylinder as the inert gas source 130, and, the piping 132 through which the inert gas from the inert gas source 130 is fed into the heating cylinder 110. The piping 132 is attached to a portion of the heating cylinder 110 more closer to the screw driving unit, as compared with a site of the heating cylinder 110 where the hopper 120 is attached, and is more specifically attached to the airtight member 113. Alternatively, the piping 132 may be attached to the rear end portion 112 of the heating cylinder 110 on the screw driving unit side. The piping 132 is configured to have a pressure control valve 133 and a pressure sensor 134 provided in the middle way thereof. In order to detect the inner pressure of the hopper 120, a second pressure sensor 135 is attached to the hopper 120. The pressure control valve 133 and the pressure sensors 134, 135 usable here may be any of those having known styles, structures and configurations. Outputs of the pressure sensors 134, 135 are supplied to a pressure control equipment 131, and by the output of the pressure control equipment 131, operations of the pressure control valve 133 and the inert gas source 130 are controlled.

In this configuration, the inert gas flows from the inert gas source 130, through the piping 132, the heating cylinder 110, and a vent portion 121 of the hopper 120, and then exits the system. More specifically, in the state that the hopper 120 is filled with the thermoplastic resin pellet of raw material 40, and that the thermoplastic resin pellet of raw material is plasticized in the space 117 between the heating cylinder 110 and the screw 115, which ranges from the portion of the heating cylinder 110 where the hopper 120 is attached up to the die 111, the inert gas is allowed to flow from the inert gas source 130, through the piping 132, the heating cylinder 110, and the hopper 120, and then discharged out from the system.

In this state, the pressure in the portion of the heating cylinder through which the inert gas flows (more specifically, the rear end portion 112) is, for example, higher than the atmospheric pressure by $2 \times 10^3$ Pa (0. 02 kgf/cm$^2$) or around. The pressure, or changes in pressure in the rear end portion 112 is detectable by the pressure sensor 134. Based on results of detection of the pressure, the pressure control valve 133 may be controlled by the pressure control equipment 131, and thereby the flow rate of the inert gas may be controlled. Meanwhile, changes in pressure in the hopper 120 is detectable by the second pressure sensor 135, and concurrently, the pressure of the inert gas at the rear end portion 112 is detectable by the pressure sensor 134. Based on results of detection of the pressure, the pressure control valve 133 and the inert gas source 130 may be controlled by the pressure control equipment 131, and thereby the flow rate of the inert gas may be controlled. In this way, the flow rate of the inert gas, which flows from the inert gas source 130, through the piping 132, the heating cylinder 110 and the hopper 120, and then exits the system, may be kept constant as possible, even if the inner pressure of the hopper 120 varies.

Any gas generated from the molten thermoplastic resin 41, having plasticized in the space 117 between the heating cylinder 110 and the screw 115, is allowed to pass through the hopper 120 together with the inert gas flowing in the heating cylinder 110, and then discharged out from the system through the vent portion 121.

In Example 11, an aluminum-sealed packaging material (packaging bag) same as that used in Example 1 was used as the airtight container 60. The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the extruder. The procedures are basically same also in Example 12 to Example 20 described later.

In Example 11, or in Example 12 to Example 17 described later, adopted was the first embodiment of extruder, by which the inner atmosphere of the hopper 120, having the thermoplastic resin pellet of raw material loaded therein, was controlled to have an oxygen gas concentration of $2 \times 10^3$ ppm or below. More specifically, the oxygen gas concentration in the inner atmosphere of the hopper 20 was controlled to $2 \times 10^3$ ppm or below, based on a method by which a sufficient amount of nitrogen gas is allowed to flow from the inert gas source 130, through the piping 132, the molding cylinder 110, and the hopper 120, and then discharged out from the system, so as to purge the aerial oxygen gas in the hopper.

Extrusion molding was then carried out. The resultant extrusion-molded article has a final cut form of thin rectangular strip of 900 mm wide, 2 mm thick, and 1200 mm long. The same will apply in Example 12 to Example 20 described later.

As for the thus obtained molded article of Example 11, measured values of the 30cm-parallel transmittance obtained for a 30cm-thick molded article at 460 nm using a C-illuminant as a light source, the YI-value, the concentration of residual organic solvent, and the solution-YI-value measured in the form of 15%-by-mass solution in methylene chloride were same as those summarized in Table 3. The molded article of Example 11 was found to satisfy all conditions including a parallel transmittance of 65% or larger, an YI-value of 18 or smaller, a concentration of residual organic solvent of $4 \times 10^2$ ppm or below, and a solution-YI-value measured in the form of a 15%-by-mass solution in methylene chloride of 2.1 or smaller.

In Comparative Example 11, a polycarbonate resin pellet synthesized and manufactured by the same method as in Example 11 was packed in a paper gag, and allowed to stand at room temperature for one month. Immediately thereafter, the polycarbonate resin pellet was loaded into the hopper provided to the extruder. Measured value of the amount of dissolved oxygen gas [C] obtained at that time was equal to the value shown listed in Table 3. The inner atmosphere of the hopper was kept as the air atmosphere. As for the molded article of Comparative Example 11, obtained under the same molding conditions as in Example 11, measured values of the 30cm-parallel transmittance, the YI-value, the concentration of residual organic solvent, and the solution-YI-value were respectively same as those summarized in Table 3.

Again in Example 11, the thermoplastic resin pellet of raw material is packaged in the airtight container having the inner atmosphere which satisfies the predetermined conditions, and the atmosphere is maintained until the point of time when the thermoplastic resin pellet of raw material is used. As a consequence, it is possible to use, as a raw material, the thermoplastic resin pellet of raw material typically having a content of dissolved oxygen gas of 0.015 cm$^3$ or less per 1 gram thereof. Accordingly, as compared with Comparative Example 11, Example 11 was more successful in obtaining the molded article made of polycarbonate resin, with a negligible level of coloring in yellow (amber), and with a distinctively high translucency which is comparable to that of a PMMA molded article.

[Example 12]

Example 12 is a modification of Example 11. In Example 12, or, in Example 14 and Example 16 which will be described later, additionally the inner pressure of the airtight container 60 was controlled to $1.3 \times 10^4$ Pa or below. Also in Example 18 to Example 20, the inner pressure of the airtight container 60 may be controlled to $1.3 \times 10^4$ Pa or below. Such inner atmosphere of the airtight container 60 was obtained by enclosing the thermoplastic resin pellet of raw material (source polycarbonate resin pellet) immediately after manufactured, and then evacuating the inside of the airtight container 60 using a vacuum pump.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4 \times 10^2$ ppm or below, and a solution-YI-value of 2.1 or smaller.

[Example 13]

Example 13 is a modification of Example 11. In Example 13, a packaging material (packaging bag) made of a nylon-gas-barrier multi-layered sheet same as that used in Example 3 was used as the airtight container 60. The inner pressure of the airtight container 60 was controlled to $1 \times 10^3$ Pa or below as in Example 11.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4 \times 10^2$ ppm or below, and a solution-YI-value of 2.1 or smaller.

[Example 14]

Example 14 is a modification of Example 12. In Example 14, a packaging material (packaging bag) made of a nylon-gas-barrier multi-layered sheet same as that used in Example 13 was used as the airtight container 60. The inner pressure of the airtight container 60 was controlled to $1.3 \times 10^4$ Pa or below as in Example 12.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4 \times 10^2$ ppm or below, and a solution-YI-value of 2.1 or smaller.

[Example 15]

Example 15 is again a modification of the method of packaging a particle-like material of Example 11. In Example 15, a metal can (more specifically, an airtight can made of stainless steel) same as that used in Example 5 was used as the airtight container 60. The oxygen gas concentration inside the airtight container 60 was again controlled to $1 \times 10^3$ ppm or below as in Example 11.

The thermoplastic resin pellet of raw material same as Example 1 was enclosed in the airtight container 60 substantially in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 16]

Example 16 is again a modification of the method of packaging a particle-like material of Example 12. In Example 16, a metal can (more specifically, an airtight can made of stainless steel) same as that used in Example 15 was used as the airtight container 60. The inner pressure of the airtight container 60 was controlled to 1. $3\times10^4$ Pa or below as in Example 12.

The thermoplastic resin pellet of raw material same as Example 1 was enclosed in the airtight container 60 substantially in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 17]

Example 17 is again a modification of Example 11. In Example 17, an oxygen gas absorbing agent was enclosed together in the airtight container 60 in the same way as in Example 7. The oxygen gas concentration inside the airtight container 60 was again controlled to $1\times10^3$ ppm or below as in Example 11.

While the airtight container 60 used here was an aluminum-sealed packaging material same as that described in Example 11, the airtight container 60 is not limited thereto, allowing use of a packaging material made of nylon-gas-barrier multi-layered sheet same as that explained in Example 13, or allowing use of a metal can (more specifically, an airtight can made of stainless steel) same as that explained in Example 15.

The thermoplastic resin pellet of raw material same as Example 1 was enclosed in the airtight container 60 substantially in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 18]

Example 18 is again a modification of Example 11, where the second embodiment of extruder was employed. More specifically, the inner pressure of the hopper, having the thermoplastic resin pellet of raw material loaded therein, was controlled to $1.3\times10^4$ Pa or below. Such control of the inner pressure of the hopper, having the thermoplastic resin pellet of raw material loaded therein, may be achieved by evacuating the inside of the hopper using a vacuum pump. Except for this point, the extrusion method for a thermoplastic resin of Example 18 may be same as the extrusion method for a thermoplastic resin of Example 11, and will not be detailed again.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

Note that Example 12 to Example 17 are, of course, applicable to the second embodiment of extruder explained in Example 18, the third embodiment of extruder which will be described later in Example 19, and the fourth embodiment of extruder which will be described later in Example 20.

[Example 19]

Example 19 is again a modification of Example 11, where the third embodiment of extruder was employed. More specifically, in Example 19, as illustrated in a conceptual drawing of the extruder in Fig. 8, the heating cylinder is equipped with an exhaust port (vent portion) 119. The extruder in Example 19, or in Example 20 described later, basically has the configuration and structure same as those of the extruder illustrated in Fig. 7, except that the exhaust port (vent portion) 119 is provided to the compression zone.

In Example 19, the inner atmosphere of the heating cylinder, in the process of plasticizing and melting the thermoplastic resin pellet of raw material, was controlled to have an oxygen gas concentration of $2\times10^3$ ppm or below.

Such control of the inner atmosphere of the heating cylinder may be achieved by evacuation and discharge through the exhaust port (vent portion) 119 using a vacuum pump, or, by introduction of nitrogen gas under evacuation using a vacuum pump, or, by replacement with a sufficient amount of nitrogen gas. Except for this point, the extrusion method for a thermoplastic resin of Example 19 may be same as the extrusion method for a thermoplastic resin of Example 11, and will not be detailed again.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

[Example 20]

Example 20 is again a modification of Example 11, where the fourth embodiment of extruder was employed. More specifically, in Example 20, same as in Example 19, the heating cylinder is equipped with an exhaust port (vent portion) 119. The inner pressure of the molding cylinder in the process of plasticizing and melting of the thermoplastic resin pellet of raw material was controlled to $1.3\times10^4$ Pa or below. Such control of the inner pressure of the heating cylinder may be achieved by evacuation through the exhaust port (vent portion) 119 using a vacuum pump. Except for this point, the extrusion method for a thermoplastic resin of Example 20 may be same as the extrusion method for a thermoplastic resin of Example 11, and will not be detailed again.

The thermoplastic resin pellet of raw material same as Example 1 was enclosed in the airtight container 60 in the same way as in Example 1, and stored for the same duration of time as in Example 1. The airtight container 60 was then unsealed, and the thermoplastic resin pellet of raw material was immediately loaded into the hopper provided to the extruder. The amount of dissolved oxygen gas [C] was found to be 0.015 cm$^3$/gram or below. The molded article was found to satisfy all conditions including a parallel transmittance of 65% or larger, a YI-value of 18 or smaller, a concentration of residual organic solvent of $4\times10^2$ ppm or below, and a solution-YI-value of 2.1 or smaller.

The present invention has been described in its preferred Examples, without being limited thereto. All of the packaging machines for a particle-like material, methods of packaging a particle-like material, injection molding machines, structures of mold assembly, methods of injection molding, extruders, methods of extrusion, shapes of molded article, materials employed, and molding conditions explained in Examples are merely for illustrative purposes, and may be modified appropriately.

In the manufacture of the pellet composed of a polycarbonate resin in Examples, the thermoplastic resin was pelletized under the air atmosphere by the cold-cut process using a strand cutter, and the thermoplastic resin pellet of raw material was stored in a tank conditioned to have an inert gas atmosphere. After enclosing the thermoplastic resin pellet of raw material into the airtight container under the air atmosphere, the inert gas was introduced into the airtight container. The procedures are, however, not necessarily limited thereto, and may use the method as follows. That is, the atmosphere in which the thermoplastic resin pellet of raw material is placed may be an inert gas atmosphere (for example, nitrogen gas atmosphere) from a point of time immediately after the pelletization. More specifically, it is possible to pelletize the thermoplastic resin by the cold-cut process using a strand cutter, to convey the obtained thermoplastic resin pellet of raw material under an inert gas atmosphere into a tank conditioned to have an inert gas atmosphere, further to convey it under an inert gas atmosphere and to enclose it in the airtight container conditioned to have an inert gas atmosphere, and then to close the opening portion of the airtight container.

[Reference Signs List]

10⋯molding cylinder; 110⋯heating cylinder; 11⋯resin deriving portion; 111⋯die; 12⋯rear end portion of the molding cylinder; 112⋯rear end portion of heating cylinder; 13, 113⋯airtight member; 14, 114⋯seal member, 15, 115⋯screw; 16, 116⋯rear end portion of screw; 17, 117⋯space; 18, 118⋯screw driving unit; 19, 119⋯exhaust port (vent portion); 20, 120⋯hopper; 21, 121⋯exhaust port (vent portion); 30, 130⋯inert gas source; 31, 131⋯pressure control equipment; 32, 132⋯piping; 33, 133⋯pressure control valve; 34, 134⋯pressure sensor; 35, 135⋯second pressure sensor; 40⋯thermoplastic resin pellet of raw material; 41⋯molten thermoplastic resin; 50⋯mold assembly; 51⋯first mold member; 52⋯second mold member; 53⋯cavity; 54⋯resin injection portion; 60⋯airtight container; 61⋯opening portion of the airtight container; 62⋯bottom of airtight container; 71⋯inert gas introduction pipe; 73⋯inert gas exhaust pipe; 72, 74⋯ through hole; 80⋯temporary closing equipment; 81A, 81B⋯ holding member; 82A, 82B⋯contacting portion; 83A, 83B⋯ supporting member; 84A, 84B⋯moving apparatus (pneumatic cylinder)

**Claims**

1. A packaging machine for a particle-like material including:

an inert gas introduction pipe (71);
an inert gas exhaust pipe (73); and,
a temporary closing equipment (80) which is configured to temporarily close an opening portion (61) of an airtight container (60) filled with a particle-like material (40), while keeping the opening portion airtight with respect to the inert gas introduction pipe and the inert gas exhaust pipe which are configured to be inserted through the opening portion into the airtight container,
wherein in the airtight container filled up with the particle-like material, an inert gas introduction portion (72) provided to the inert gas introduction pipe, and, an inert gas exhaust portion (74) provided to the inert gas exhaust pipe, are kept buried in the particle-like material, and the inert gas introduction pipe and the inert gas exhaust pipe are arranged apart from each other in the airtight container,
**characterized in that** (i) the inert gas introduction portion provided to the inert gas introduction pipe is configured by a plurality of through holes (72), the diameter of which becoming larger as becoming more distant from the opening portion of the airtight container when the inert gas introduction pipe is inside the airtight container; and, the inert gas exhaust portion provided to the inert gas exhaust pipe is configured by a plurality of through holes (74), the diameter of which becoming larger as becoming more distant from the opening portion of the airtight container when the inert gas exhaust pipe is inside the airtight container; or (ii) the inert gas introduction portion provided to the inert gas introduction pipe is configured by one or a plurality of slit potions, the width of which becoming larger as becoming more distant from the opening portion of the airtight container when the inert gas introduction pipe is inside the airtight container; and the inert gas exhaust portion provided to the inert gas exhaust pipe is configured by one or a plurality of slit portions, the width of which becoming larger as becoming more distant from the opening portion of the airtight container when the inert gas exhaust pipe is inside the airtight container.

2. The packaging machine for a particle-like material according to claim 1,

wherein the temporary closing equipment is configured by:

a pair of holding members (81A, 81B) which hold the opening portion of the airtight container from the outside for airtight closure; and,
a moving apparatus (84A, 84B) which moves the holding members in an approaching direction and in a departing direction, to or from each other.

3. The packaging machine for a particle-like material according to claim 2,

wherein portions (82A, 82B) of the holding members which are brought into contact with the opening portion of the airtight container are configured by a flexible material.

4. The packaging machine for a particle-like material according to claim 3,

wherein the inert gas introduction pipe and the inert gas exhaust pipe, which are inserted through the opening portion into the airtight container, are kept airtight with respect to the opening portion, by configuring the portions of the holding members, which are brought into contact with the opening portion of the airtight container, with a flexible material.

5. The packaging machine for a particle-like material according to claim 3,

wherein the flexible material is composed of rubber or urethane.

6. The packaging machine for a particle-like material according to claim 2,

wherein the moving apparatus is configured by a cylinder driven by pneumatic pressure or hydraulic pressure.

7. The packaging machine for a particle-like material according to claim 1, further including a heat-seal equipment which heat-seals the opening portion of the airtight container.

8.  A method of packaging a particle-like material (40), the method including:

    creating a state where an inert gas introduction pipe (71) and an inert gas exhaust pipe (73) being inserted into an airtight container (60) while keeping an opening portion (61) thereof unsealed wherein the inert gas introduction pipe and the inert gas exhaust pipe are arranged apart from each other in the airtight container, and where the airtight container being filled up with a particle-like material (40), an inert gas introduction portion (72) provided to the inert gas introduction pipe, and, an inert gas exhaust portion (74) provided to the inert gas exhaust pipe are kept buried in the particle-like material, and then temporarily closing the opening portion;
    introducing an inert gas through the inert gas introduction pipe into the airtight container, and discharging the inert gas introduced into the airtight container out through the inert gas exhaust pipe, to thereby replace the inside of the airtight container with the inert gas; and,
    removing the inert gas introduction pipe and the inert gas exhaust pipe out from the airtight container, and then closing the opening portion of the airtight container,
    **characterized in that** (i) the inert gas introduction portion provided to the inert gas introduction pipe is configured by a plurality of through holes (72), the diameter of which becoming larger as becoming more distant from the opening portion of the airtight container when the inert gas introduction pipe is inside the airtight container; and, the inert gas exhaust portion provided to the inert gas exhaust pipe is configured by a plurality of through holes (74), the diameter of which becoming larger as becoming more distant from the opening portion of the airtight container when the inert gas exhaust pipe is inside the airtight container; or (ii) the inert gas introduction portion provided to the inert gas introduction pipe is configured by one or a plurality of slit potions, the width of which becoming larger as becoming more distant from the opening portion of the airtight container when the inert gas introduction pipe is inside the airtight container; and the inert gas exhaust portion provided to the inert gas exhaust pipe is configured by one or a plurality of slit portions, the width of which becoming larger as becoming more distant from the opening portion of the airtight container when the inert gas exhaust pipe is inside the airtight container.

9.  The method of packaging a particle-like material according to claim 8, the method including:

    using an airtight container (60) having an oxygen transmission rate of 100 $cm^3/(m^2 \cdot 24h \cdot atm)$ or below, and a moisture vapor transmission rate at 40°C, 90% RH of 0.1 gram/ (mm·24 hours) or less;
    temporarily closing the opening portion, while filling the airtight container with the particle-like material having a content of dissolved oxygen gas, per 1 gram of particle-like material, of 0.015 $cm^3$ or less; and,
    closing the opening portion of the airtight container, while keeping the oxygen gas concentration in the inner atmosphere of the airtight container at 2% by volume or below.

10. The method of packaging a particle-like material according to claim 9, the method including:

    temporarily closing the opening portion, while filling the inside of the airtight container with the particle-like material having a moisture content of $2 \times 10^2$ ppm or less; and,
    closing the opening portion of the airtight container, while controlling the total moisture content in the inner atmosphere of the airtight container to 0.2 mg per 1 gram of particle-like material.

11. The method of packaging a particle-like material according to claim 8,
    wherein the inert gas, having been introduced into the airtight container, is discharged through the inert gas exhaust pipe under the evacuated condition, to an inert gas disposal portion.

12. The method of packaging a particle-like material according to claim 8,
    wherein an oxygen gas absorbing agent is additionally enclosed in the airtight container.

13. The method of packaging a particle-like material according to claim 8,
    wherein the inner pressure of the airtight container is controlled to $1.3 \times 10^4$ Pa or below.

14. The method of packaging a particle-like material according to claim 8,
    wherein the airtight container is composed of an aluminum-sealed packaging material, or, a packaging material made of nylon-gas-barrier multi-layered sheet.

15. The method of packaging a particle-like material according to claim 8,
    wherein the airtight container is composed of a metal can.

**Patentansprüche**

1. Verpackungsmaschine für ein teilchenartiges Material, einschließend:

   eine Inertgaseinführungsleitung (71);
   eine Inertgasausstoßleitung (73); und,
   ein temporäres Verschlussequipment (80), das eingerichtet ist, um temporär einen Öffnungsteil (61) eines luftdichten Behälters (60) zu verschließen, der mit einem teilchenartigen Material (40) gefüllt ist, während der Öffnungsteil luftdicht gehalten wird in Bezug auf die Inertgaseinführungsleitung und die Inertgasausstoßleitung, die eingerichtet sind, um durch den Öffnungsteil in den luftdichten Behälter eingeführt zu werden, wobei in dem mit teilchenartigem Material angefüllten luftdichten Behälter ein Inertgaseinführungsteil (72) an der Inertgaseinführungsleitung bereitgestellt ist, und ein Inertgasausstoßteil (74) an der Inertgasausstoßleitung bereitgestellt ist, die in dem teilchenartigen Material begraben bleiben, und wobei die Inertgaseinführungsleitung und die Inertgasausstoßleitung voneinander entfernt in dem luftdichten Behälter angeordnet sind, **dadurch gekennzeichnet, dass** (i) der Inertgaseinführungsteil, bereitgestellt an der Inertgaseinführungsleitung, mittels einer Vielzahl von Durchgangslöchern (72) eingerichtet ist, deren Durchmesser größer wird, während sie sich weiter von dem Öffnungsteil des luftdichten Behälters entfernen, wenn die Inertgaseinführungsleitung innerhalb des luftdichten Behälters ist; und, wobei der Inertgasausstoßteil, bereitgestellt an der Inertgasausstoßleitung, mittels einer Vielzahl von Durchgangslöchern (74) eingerichtet ist, deren Durchmesser größer wird, während sie sich weiter von dem Öffnungsteil des luftdichten Behälters entfernen, wenn die Inertgasausstoßleitung innerhalb des luftdichten Behälters ist; oder (ii) der Inertgaseinführungsteil, bereitgestellt an der Inertgaseinführungsleitung, mittels eines oder einer Vielzahl von Schlitzteilen eingerichtet ist, wobei deren Breite größer wird, während sie sich weiter von dem Öffnungsteil des luftdichten Behälters entfernen, wenn die Inertgaseinführungsleitung innerhalb des luftdichten Behälters ist; und wobei der Inertgasausstoßteil, bereitgestellt an der Inertgasausstoßleitung, mittels eines oder einer Vielzahl von Schlitzteilen eingerichtet ist, deren Breite größer wird, während sie sich weiter von dem Öffnungsteil des luftdichten Behälters entfernen, wenn die Inertgasausstoßleitung innerhalb des luftdichten Behälters ist.

2. Verpackungsmaschine für ein teilchenartiges Material nach Anspruch 1,
   wobei das temporäre Verschlussequipment mittels Folgendem eingerichtet ist:

   ein Paar von Halteelementen (81A, 81B), die den Öffnungsteil des luftdichten Behälters von außen zum luftdichten Verschluss halten; und
   eine Bewegungsvorrichtung (84A, 84B), die die Halteelemente in einer Annäherungsrichtung und in einer Entfernungsrichtung auf einander zu und voneinander weg bewegt.

3. Verpackungsmaschine für ein teilchenartiges Material nach Anspruch 2,

   wobei Teile (82A, 82B) der Halteelemente, die mit dem Öffnungsteil des luftdichten Behälters in Kontakt gebracht werden, eingerichtet sind mittels eines flexiblen Materials.

4. Verpackungsmaschine für ein teilchenartiges Material nach Anspruch 3,

   wobei die Inertgaseinführungsleitung und die Inertgasausstoßleitung, die durch den Öffnungsteil in den luftdichten Behälter eingeführt werden, luftdicht in Bezug auf den Öffnungsteil gehalten werden, mittels Einrichtens der Teile der Halteelemente, die in Kontakt mit dem Öffnungsteil des luftdichten Behälters gebracht werden, mit einem flexiblen Material.

5. Verpackungsmaschine für ein teilchenartiges Material nach Anspruch 3,

   wobei das flexible Material aus Gummi oder Urethan besteht.

6. Verpackungsmaschine für ein teilchenartiges Material nach Anspruch 2,

   wobei die Bewegungsvorrichtung mittels eines Zylinders eingerichtet ist, der mittels pneumatischen Drucks oder hydraulischen Drucks angetrieben wird.

7. Verpackungsmaschine für ein teilchenartiges Material nach Anspruch 1, weiter einschließend ein Wärmedichtungsequipment, das den Öffnungsteil des luftdichten Behälters wärmeabdichtet.

8. Verfahren zum Verpacken eines teilchenartigen Materials (40), wobei das Verfahren einschließt:

Erzeugen eines Zustands, wo eine Inertgaseinführungsleitung (71) und eine Inertgasausstoßleitung (73) in einen luftdichten Behälter (60) eingeführt werden, während ein Öffnungsteil (61) davon unabgedichtet gehalten wird, wobei die Inertgaseinführungsleitung und die Inertgasausstoßleitung voneinander entfernt in dem luftdichten Behälter angeordnet sind, und wo der luftdichte Behälter mit einem teilchenartigem Material (40) angefüllt wird, wobei ein Inertgaseinführungsteil (72), bereitgestellt an der Inertgaseinführungsleitung, und ein Inertgasausstoßteil (74), bereitgestellt an der Inertgasausstoßleitung, in dem teilchenartigen Material begraben bleiben, und dann temporäres Verschließen des Öffnungsteils;
Einführen eines Inertgases durch die Inertgaseinführungsleitung in den luftdichten Behälter, und Entladen des Inertgases, eingeführt in den luftdichten Behälter, aus der Inertgasausstoßleitung, um dadurch das Innere des luftdichten Behälters mit Inertgas zu ersetzen; und,
Entfernen der Inertgaseinführungsleitung und der Inertgasausstoßleitung aus dem luftdichten Behälter, und dann Verschließen des Öffnungsteils des luftdichten Behälters,
**dadurch gekennzeichnet, dass** (i) der Inertgaseinführungsteil, bereitgestellt an der Inertgaseinführungsleitung, mittels einer Vielzahl von Durchgangslöchern (72) eingerichtet ist, deren Durchmesser größer wird, während sie sich weiter von dem Öffnungsteil des luftdichten Behälters entfernen, wenn die Inertgaseinführungsleitung innerhalb des luftdichten Behälters ist;
und, wobei der Inertgasausstoßteil, bereitgestellt an der Inertgasausstoßleitung, mittels einer Vielzahl von Durchgangslöchern (74) eingerichtet ist, deren Durchmesser größer wird, während sie sich weiter von dem Öffnungsteil des luftdichten Behälters entfernen, wenn die Inertgasausstoßleitung innerhalb des luftdichten Behälters ist;
oder (ii) der Inertgaseinführungsteil, bereitgestellt an der Inertgaseinführungsleitung, mittels eines oder einer Vielzahl von Schlitzteilen eingerichtet ist, wobei deren Breite größer wird, während sie sich weiter von dem Öffnungsteil des luftdichten Behälters entfernen, wenn die Inertgaseinführungsleitung innerhalb des luftdichten Behälters ist; und wobei der Inertgasausstoßteil, bereitgestellt an der Inertgasausstoßleitung, mittels eines oder einer Vielzahl von Schlitzteilen eingerichtet ist, deren Breite größer wird, während sie sich weiter von dem Öffnungsteil des luftdichten Behälters entfernen, wenn die Inertgasausstoßleitung innerhalb des luftdichten Behälters ist.

9. Verfahren zum Verpacken eines teilchenartigen Materials nach Anspruch 8, wobei das Verfahren einschließt:

Verwenden eines luftdichten Behälters (60), der eine Sauerstofftransmissionsrate von 100 $cm^3/(m^2 \cdot 24h \cdot atm)$ oder darunter, und eine Feuchtigkeitsdampftransmissionsrate bei 40°C, 90% RH von 0,1 Gramm/($m^2 \cdot 24$ Stunden) oder weniger aufweist;
temporäres Verschließen des Öffnungsteils, während Füllens des luftdichten Behälters mit dem teilchenartigen Material, das einen Inhalt von aufgelöstem Sauerstoffgas, pro 1 Gramm des teilchenartigen Materials, von 0,015 $cm^3$ oder weniger, aufweist; und
Verschließen des Öffnungsteils des luftdichten Behälters, während Haltens der Sauerstoffgaskonzentration in der inneren Atmosphäre des luftdichten Behälters bei 2 Volumen-% oder darunter.

10. Verfahren zum Verpacken eines teilchenartigen Materials nach Anspruch 9, wobei das Verfahren einschließt:

temporäres Verschließen des Öffnungsteils, während Füllens des Inneren des luftdichten Behälters mit dem teilchenartigen Material, das einen Feuchtigkeitsgehalt von $2 \times 10^2$ ppm oder weniger aufweist; und
Verschließen des Öffnungsteils des luftdichten Behälters, während der Gesamtfeuchtigkeitsgehalt in der inneren Atmosphäre des luftdichten Behälters auf 0,2 mg pro 1 Gramm des teilchenartigen Materials gesteuert wird.

11. Verfahren zum Verpacken eines teilchenartigen Materials nach Anspruch 8,

wobei das Inertgas, das in den luftdichten Behälter eingeführt wurde, durch die Inertgasausstoßleitung unter der evakuierten Bedingung an einen Inertgasentsorgungsteil entladen wird.

12. Verfahren zum Verpacken eines teilchenartigen Materials nach Anspruch 8,

wobei ein Sauerstoffgasabsorptionsstoff zusätzlich in dem luftdichten Behälter enthalten ist.

**13.** Verfahren zum Verpacken eines teilchenartigen Materials nach Anspruch 8,

wobei der innere Druck des luftdichten Behälters auf 1,3x10$^4$ Pa oder darunter gesteuert wird.

**14.** Verfahren zum Verpacken eines teilchenartigen Materials nach Anspruch 8,

wobei der luftdichte Behälter aus einem Aluminium-abgedichteten Verpackungsmaterial oder einem Verpackungsmaterial hergestellt aus Nylon-Gas-Barriere-Multi-Schicht-Blatt besteht.

**15.** Verfahren zum Verpacken eines teilchenartigen Materials nach Anspruch 8,

wobei der luftdichte Behälter aus einer Metalldose besteht.


**Revendications**

**1.** Machine d'emballage pour un matériau analogue à une particule comprenant :

un conduit d'introduction de gaz inerte (71) ;
un conduit d'échappement de gaz inerte (73) ; et
un équipement de fermeture temporaire (80) qui est configuré pour fermer temporairement une partie d'ouverture (61) d'un récipient étanche (60) rempli d'un matériau analogue à une particule (40), tout en maintenant la partie d'ouverture étanche par rapport au conduit d'introduction de gaz inerte et au conduit d'échappement de gaz inerte qui sont configurés pour être insérés à travers la partie d'ouverture dans le récipient étanche, dans laquelle, dans le récipient étanche rempli de matériau analogue à une particule, une partie d'introduction de gaz inerte (72) fournie dans le conduit d'introduction de gaz inerte, et une partie d'échappement de gaz inerte (74) fournie dans le conduit d'échappement de gaz inerte, sont maintenues enfouies dans le matériau analogue à une particule, et le conduit d'introduction de gaz inerte et le conduit d'échappement de gaz inerte sont agencés séparément l'un de l'autre dans le récipient étanche, **caractérisée en ce que** (i) la partie d'introduction de gaz inerte fournie dans le conduit d'introduction de gaz inerte est configurée par une pluralité d'orifices traversants (72), dont le diamètre augmente à mesure que la distance par rapport à la partie d'ouverture du récipient étanche augmente lorsque le conduit d'introduction de gaz inerte est à l'intérieur du récipient étanche; et la partie d'échappement de gaz inerte fournie dans le conduit d'échappement de gaz inerte est configurée par une pluralité d'orifices traversants (74), dont le diamètre augmente à mesure que la distance par rapport à la partie d'ouverture du récipient étanche augmente lorsque le conduit d'échappement de gaz inerte est à l'intérieur du récipient étanche; ou (ii) la partie d'introduction de gaz inerte fournie dans le conduit d'introduction de gaz inerte est configurée par une ou une pluralité de parties fentes, dont la largeur augmente à mesure que la distance par rapport à la partie d'ouverture du récipient étanche augmente lorsque le conduit d'introduction de gaz inerte est à l'intérieur du récipient étanche ; et la partie d'échappement de gaz inerte fournie dans le conduit d'échappement de gaz inerte est configurée par une ou une pluralité de parties fentes dont la largeur augmente à mesure que la distance par rapport à la partie d'ouverture du récipient étanche augmente lorsque le conduit d'échappement de gaz inerte est à l'intérieur du récipient étanche.

**2.** Machine d'emballage pour un matériau analogue à une particule selon la revendication 1, dans laquelle l'équipement de fermeture temporaire est configuré par :

une paire d'éléments de retenue (81A, 81B) qui retiennent la partie d'ouverture du récipient étanche depuis l'extérieur pour la fermeture étanche ; et
un appareil de déplacement (84A, 84B) qui déplace les éléments de retenue dans une direction d'approche et dans une direction d'éloignement, les uns vers les autres ou les uns des autres.

**3.** Machine d'emballage pour un matériau analogue à une particule selon la revendication 2, dans laquelle des parties (82A, 82B) des éléments de retenue qui sont amenées en contact avec la partie d'ouverture du récipient étanche sont configurées par un matériau flexible.

**4.** Machine d'emballage pour un matériau analogue à une particule selon la revendication 3, dans laquelle le conduit d'introduction de gaz inerte et le conduit d'échappement de gaz inerte, qui sont insérés à travers la partie d'ouverture dans le récipient étanche, sont maintenus étanches par rapport à la partie d'ouverture, en configurant les parties des éléments de retenue, qui sont amenées en contact avec la partie d'ouverture du récipient étanche, avec un matériau flexible.

**5.** Machine d'emballage pour un matériau analogue à une particule selon la revendication 3, dans laquelle le matériau flexible est composé de caoutchouc ou d'uréthane.

**6.** Machine d'emballage pour un matériau analogue à une particule selon la revendication 2, dans laquelle l'appareil de déplacement est configuré par un vérin entraîné par pression pneumatique ou pression hydraulique.

**7.** Machine d'emballage pour un matériau analogue à une particule selon la revendication 1, comprenant en outre un équipement de scellement thermique qui scelle thermiquement la partie d'ouverture du récipient étanche.

**8.** Procédé d'emballage d'un matériau analogue à une particule (40), le procédé comprenant :

la création d'un état où un conduit d'introduction de gaz inerte (71) et un conduit d'échappement de gaz inerte (73) sont insérés dans un récipient étanche (60) tout en maintenant une partie d'ouverture (61) de celui-ci non scellée, dans lequel le conduit d'introduction de gaz inerte et le conduit d'échappement de gaz inerte sont agencés à distance l'un de l'autre dans le récipient étanche, et où le récipient étanche est rempli d'un matériau analogue à une particule (40), une partie d'introduction de gaz inerte (72) fournie dans le conduit d'introduction de gaz inerte, et une partie d'échappement de gaz inerte (74) fournie dans le conduit d'échappement de gaz inerte sont maintenues enfouies dans le matériau analogue à une particule,
et puis, temporairement,
la fermeture de la partie d'ouverture ;
l'introduction d'un gaz inerte à travers le conduit d'introduction de gaz inerte jusque dans le récipient étanche, et l'expulsion du gaz inerte introduit dans le récipient étanche à travers le conduit d'échappement de gaz inerte, pour ainsi remplacer l'intérieur du récipient étanche par le gaz inerte ; et
le retrait du conduit d'introduction de gaz inerte et du conduit d'échappement de gaz inerte à partir du récipient étanche, et puis la fermeture de la partie d'ouverture du récipient étanche,
**caractérisé en ce que** (i) la partie d'introduction de gaz inerte fournie dans le conduit d'introduction de gaz inerte est configurée par une pluralité d'orifices traversants (72), dont le diamètre augmente à mesure que la distance par rapport à la partie d'ouverture du récipient étanche augmente lorsque le conduit d'introduction de gaz inerte est à l'intérieur du récipient étanche; et la partie d'échappement de gaz inerte fournie dans le conduit d'échappement de gaz inerte est configurée par une pluralité d'orifices traversants (74), dont le diamètre augmente à mesure que la distance par rapport à la partie d'ouverture du récipient étanche augmente lorsque le conduit d'échappement de gaz inerte est à l'intérieur du récipient étanche; ou (ii) la partie d'introduction de gaz inerte fournie dans le conduit d'introduction de gaz inerte est configurée par une ou une pluralité de parties fentes dont la largeur augmente à mesure que la distance par rapport à la partie d'ouverture du récipient étanche augmente lorsque le conduit d'introduction de gaz inerte est à l'intérieur du récipient étanche ; et la partie d'échappement de gaz inerte fournie dans le conduit d'échappement de gaz inerte est configurée par une ou une pluralité de parties fentes dont la largeur augmente à mesure que la distance par rapport à la partie d'ouverture du récipient étanche augmente lorsque le conduit d'échappement de gaz inerte est à l'intérieur du récipient étanche.

**9.** Procédé d'emballage d'un matériau analogue à une particule selon la revendication 8, le procédé comprenant :

l'utilisation d'un récipient étanche (60) ayant un taux de transmission d'oxygène de 100 $cm^3$/($m^2$·24h·atm) ou moins, et un taux de transmission de vapeur d'eau à 40°C et 90 % d'HR de 0,1 gramme/($m^2$·24 heures) ou moins ;
la fermeture temporaire de la partie d'ouverture, tout en remplissant le récipient étanche avec la matériau analogue à une particule ayant une teneur en oxygène gazeux dissous, pour 1 g de matériau analogue à une particule, de 0,015 $cm^3$ ou moins ; et
la fermeture de la partie d'ouverture du récipient étanche, tout en maintenant la concentration d'oxygène gazeux dans l'atmosphère interne du récipient étanche à 2 % en volume ou en dessous.

**10.** Procédé d'emballage d'un matériau analogue à une particule selon la revendication 9, le procédé comprenant :

la fermeture temporaire de la partie d'ouverture, tout en remplissant l'intérieur du récipient étanche avec le matériau analogue à une particule ayant une teneur en humidité de $2 \times 10^2$ ppm ou moins ; et
la fermeture de la partie d'ouverture du récipient étanche, tout en contrôlant la teneur totale en humidité dans l'atmosphère interne du récipient étanche à 0,2 mg pour 1 gramme de matériau analogue à une particule.

11. Procédé d'emballage d'un matériau analogue à une particule, selon la revendication 8, dans lequel le gaz inerte, ayant été introduit dans le récipient étanche, est expulsé à travers le conduit d'échappement de gaz inerte sous la condition évacuée, jusqu'à une partie d'évacuation de gaz inerte.

12. Procédé d'emballage d'un matériau analogue à une particule selon la revendication 8, dans lequel un agent absorbant l'oxygène gazeux est de plus renfermé dans le récipient étanche.

13. Procédé d'emballage d'un matériau analogue à une particule selon la revendication 8, dans lequel la pression interne du récipient étanche est contrôlée à $1,3 \times 10^4$ Pa ou en-dessous.

14. Procédé d'emballage d'un matériau analogue à une particule selon la revendication 8, dans lequel le récipient étanche est composé d'un matériau d'emballage scellé par de l'aluminium, ou d'un matériau d'emballage constitué d'une feuille de nylon multicouche étanche aux gaz.

15. Procédé d'emballage d'un matériau analogue à une particule selon la revendication 8, dans lequel le récipient étanche est composé d'un contenant métallique.

Fig. 1A

Fig. 1B

Fig. 2A

Fig. 2B

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06145337 A
- JP H05331277 A
- JP 2002533544 W
- JP H06145492 A
- JP 2009029031 A
- JP 2001088176 A
- JP S5571226 A

**Non-patent literature cited in the description**

- Poricaboneto rej in handobukku, in Japanese (Handbook of Polycarbonate Resin). 323
- *Journal of Applied Polymer Science,* vol. 10, 843-857